# EUROPEAN PATENT APPLICATION

(11) **EP 2 073 293 A1**
(43) Date of publication of application: **24.06.2009**
(21) Application number: 07024488.4
(22) Date of filing: 18.12.2007
(51) Int. Cl.: H01M 2/10

(54) **Protective jacket**

(71) Applicant: NMC S.A., 4731 Eynatten (BE)
(72) Inventor: Zamorano, Rafaël, 4633 Melen-Soumagne (BE); Meessen, Silvain, 4840 Welkenraedt (BE); Mayeres, Jean-Pierre, 4700 Eupen (BE); Job, Denis, 4031 Angleur (BE)
(74) Representative: Jostarndt, Hans-Dieter

(57) **Abstract**

The invention relates to a protective jacket, which could be used to protect batteries and especially car batteries from excessive, repeated and/or unwanted temperature variations. The protective jacket according to the present invention, which may be used to protect a battery against excessive, repeated and/or unwanted temperature variations, may thereby comprise at least two wall-elements linked one to another, each by at least two edges, whereby each of these wall-elements comprises at least one protruding bead arranged in a way, so that each protruding bead is directed towards the inside of the protective jacket.

## Description

The present invention relates to a protective jacket, which could be used to protect batteries and especially car batteries from excessive, repeated and/or unwanted temperature variations.

Different protective devices for car batteries are already known from the art.

The French patent application FR 2691291 describes for example a protective box comprising a lid, which may be fixed to it using a system on pins and holes to get a closed protective box. The closed protective box made for example of polystyrene thus protects a battery located inside the box from excessive, repeated and/or unwanted temperature variations.

The international patent application WO 01/61769 discloses the use of a protective box comprising two parts, which may be welded together to get a closed protective box.

The international patent application WO 04/064082 discloses the use of a protective box comprising at least a lid, a bottom element and a sidewall, which may be fixed for example by gluing or by using hooks and loops to get a protective box.

The patent application JP 09120812 discloses the use of a protective box comprising an exterior case equipped with a lid and an acrylic foam which completely surrounds a battery located inside the exterior case.

All these protective devices may achieve to get a better protection of a battery against excessive, repeated and/or unwanted temperature variations compared to batteries, which are used unprotected. This may be important because excessive, repeated and/or unwanted temperature variations may have negative effects on the ability of a battery to function and/or on its performance and/or on the battery's lifetime. This may be especially important as far as car batteries are concerned, because users want their cars and their car batteries to be highly reliable and providing high performance.

However, beside a good protection of the battery against excessive, repeated and/or unwanted temperature variations, the placement of the protective device may also be an important issue. A quick and/or easy placement of the protective device may be often highly desired to facilitate the implementation of the placement during industrial manufacturing and/or handling processes. To facilitate the use of a protective device it should thus be very quick and/or easy to place, while providing a good protection of a battery against excessive, repeated and/or unwanted temperature variations.

The protective devices proposed in the art lag to provide a good protection of a battery against excessive, repeated and/or unwanted temperature variations, while also allowing an easy and/or quick placement.

The object of the present invention is therefore to provide a protective jacket allowing a good protection of a battery against excessive, repeated and/or unwanted temperature variations, while also allowing a quick and/or easy placement of the protective jacket on the battery.

According to the invention, this objective is achieved by a protective jacket having the features of the independent Claim 1. Advantageous refinements of the protective jacket are set forth in the subordinate Claims 2 through 17. The objective of the present invention is also achieved by a method to produce a protective jacket according to Claim 18. Advantageous embodiments of the method are likewise set forth in the subordinate Claims 19 through 20.

The advantage of the protective jacket according to the present invention and of the appertaining method to produce a protective jacket according to the present invention lies in the effective and reliable protection of a battery against excessive, repeated and/or unwanted temperature variations, while also allowing a quick and/or easy placement of the protective jacket.

Additional advantages, special features and practical refinements of the invention can be gleaned from the subordinate claims and from the presentation below of preferred embodiments making reference to the figures.

According to the present invention a battery may be protected against excessive, repeated and/or unwanted temperature variations, by a protective jacket comprising at least four wall-elements linked one to another, each by at least two edges, whereby each of these wall-elements comprises at least one protruding bead arranged in a way, so that each protruding bead may be directed towards the inside of the protective jacket. Directed towards the inside of the protective jacket may thereby mean that the protruding bead(s) may face an object to be protected, especially a battery or car battery, on which the protective jacket may be placed.

A wall-element my thereby for example be a polygonal and preferably square like or even more preferred rectangular part of a plate and/or sheet of a heat insulating material used for the protective jacket. Each wall-element and/or each plate and/or sheet of a heat insulating material may have a certain thickness and dimensions, which may be slightly bigger than the dimensions of one side of an object to be protected and especially of a battery or car battery. Each wall-element may have different dimensions or the same dimensions depending on the design of the object to be protected and especially on design of the battery or car battery.

The thickness of a plate and/or sheet of a heat insulating material used for the protective jacket and thus the thickness of a wall-element may be comprised for example between 1 mm and 40 mm, preferably between 1,5 mm and 30 mm, further preferred between 2 mm and 20 mm, further preferred between 2,5 mm and 10 mm, further preferred 3 and 6 mm. With an increasing thickness the protection of a battery against excessive, repeated and/or unwanted temperature variations becomes better. Moreover, if the heat insulating material used for the protective jacket is compressible, an increasing thickness may also allow to accommodate some production tolerances concerning the dimensions of an object to be protected, especially a battery or car battery, as well as concerning the dimensions of the protective jacket, although allowing a good fitting of the protective jacket on an object to be protected, especially a battery or car battery. This may allow a quick and/or easy placement of the protective jacket.

The wall-elements may each have the same or different thicknesses. Moreover, at least one part of at least one wall-element may have a different thickness than at least one other part of this wall-element. This allows obtaining a good fitting of the protective jacket to an object to be protected, especially a battery or car battery.

Dimensions, which may be slightly bigger for the wall-element(s) than the dimensions of one side of an object to be protected and especially of a battery or car battery, may mean that the dimensions of the wall-element(s) are chosen to allow an open box without bottom part nor lid formed by the four wall-elements linked one to another, each by at least two edges, to be placed by sliding on an object to be protected, especially a battery or car battery, so that the protective jacket exactly fits the object to be protected and especially the battery or car battery and keeps at least partially in contact with the object to be protected, especially the battery or car battery. That the protective jacket keeps at least partially in contact with an object to be protected, especially a battery or car battery, may mean there may be a contact between at least one part of the protective jacket and specially between at least one of the protruding beads of the protective jacket and at least one part of an object to be protected and especially at least one part of a battery or car battery.

The wall-elements of the protective jacket according to the present invention are linked one to another, each by at least two edges. This may be realized for example by using one or preferably two or even three or four plate(s) and/or sheet(s) of a heat insulating material used for assembling the protective jacket comprising each at least one wall-element. The plate(s) and/or sheet(s) of a heat insulating material used for the protective jacket may comprise one or more than one wall-element. When one and the same plate and/or sheet comprises more than one wall-element especially two, three or four wall-elements, one may consider that these wall-elements are simply linked one to another, each by at least two edges, because they are part of one and the same sheet and/or plate of a heat insulating material used for the protective jacket. At least two different wall-elements may however then be defined using at least one plate and/or sheet of a heat insulating material used for the protective jacket by folding this/these plate(s) and/or sheet(s) of a heat insulating material used for the protective jacket in an appropriate way, so that at least two polygonal parts of this/these plate(s) and/or sheet(s) of a heat insulating material used for the protective jacket, with dimensions that may be slightly bigger than the dimensions of one side of an object to be protected, especially of a battery or car battery may be defined.

It should be noted that the protective jacket according the present invention is provided fully assembled, so that the at least four wall-elements are already linked one to another, each by at least two edges. It may therefore become possible to place the protective very quickly and/or easily on and/or around the object to be protected, especially the battery or car battery, preferably simply by sliding it on the object to be protected, especially the battery or car battery. Preferably no parts of the protective jacket have to be assembled, fixed together or to something else, glued together or to something else, welded together or with something else during and/or after the placement of the protective jacket, so that preferably no assembling, fixing, gluing or welding step or the like may therefore be required during and/or after the placement of the protective jacket. The placement of the protective jacket is thereby further facilitated.

In one embodiment of the present invention the wall-elements may all be part of the same plate and/or sheet of an heat insulating material used for the protective jacket, each wall-element being defined by folding the plate and/or sheet of a heat insulating material used for the protective jacket in an appropriate way, so that at least four polygonal parts of this plate and/or sheet of a heat insulating material used for the protective jacket, with dimensions that may be slightly bigger, than the dimensions of one side of an object to be protected and especially of a battery or car battery may be defined. In this embodiment one edge of this plate and/or sheet of an heat insulating material used for the protective jacket may be linked to another edge this plate and/or sheet of a heat insulating material used for the protective jacket to get a four walled box without lid nor bottom part, so that all wall-elements are linked one to another, each by at least two edges. This may mean that in this case at least two wall-elements may be linked together for example by gluing or welding or by any other suitable mean or technique, as two edges of the same plate and/or sheet of a heat insulating material used for the protective jacket may be linked together. The link between the two edges of this plate and/or sheet of a heat insulating material may thereby be provided for example by gluing and/or by welding or by any other suitable means or technique.

In another embodiment of the protective jacket according to the present invention, the protective jacket may comprise at least two plates and/or sheets of a heat insulating material, which may each comprise at least one and preferably at least two wall-element(s). Two wall-elements may be defined by folding each plate and/or sheet of a heat insulating material, so that at least two polygonal parts of a plate and/or sheet of a heat insulating material, with dimensions that may be slightly bigger than the dimensions of one side of an object to be protected and especially of a battery or car battery may be defined. In this embodiment the different plates and/or sheets of a heat insulating material may be linked together preferably each by at least two of their edges to form four walled box without lid nor bottom part, so that all wall-elements are linked one to another, each by at least two edges. This may mean that in this case at least two plates and/or sheets of a heat insulating material used for the protective jacket may be linked together for example by gluing or welding or by any other suitable mean or technique, as two edges of at least one plate and/or sheet of a heat insulating material used for the protective jacket may be linked to at least two other edges of at least another plate and/or sheet of a heat insulating material used for the protective jacket. The link between the edges of these wall-elements and/or plates and/or sheets of a heat insulating material may thereby also be provided for example by gluing and/or by welding or by any other suitable mean or technique.

Other suitable means or techniques to provide a link between at least one edge of at least one wall-element and/or of at least one plate and/or sheet of a heat insulating material with at least another edge of at least another wall-element and/or of at least another or even of the same plate and/or sheet of a heat insulating material may for example be the lamination by applying heat and/or pressure of at least two wall-elements and/or at least one plate and/or sheet of a heat insulating material with a linking layer, which may be for example a polymeric layer especially a polymeric sheet, a woven or specially preferred a non woven layer specially for example a felt layer, so that all the wall-elements and/or all the plates and/or sheets of a heat insulating material laminated with the same linking layer are linked one to another by this linking layer.

In even another embodiment of the present invention each wall-element may correspond to an individual plate and/or sheet of a heat insulating material. In this case each wall-element and/or each plate and/or sheet of a heat insulating material may be linked to at least two other wall-elements and/or at least two other plates and/or sheets of a heat insulating material to form a four walled box without lid nor bottom part, so that all wall-elements are linked one to another, each by at least two edges. This may mean that each wall-element corresponding to an individual plate and/or sheet of a heat insulating material may thus be linked to the other wall-elements and/or the other plate(s) and/or sheet(s) of a heat insulating material by at least two edges. The linking may thereby also be provided for example by gluing and/or by welding or by any other suitable mean or technique. In these particular cases it should be noted that the terms wall-element(s) and plate(s) and/or sheet(s) of a heat insulating material may be used as synonyms, as each wall-elements correspond to an individual plate and/or sheet of a heat insulating material. Using wall-elements, which correspond to an individual plate and/or sheet of a heat insulating material may allow more flexibility concerning the design of individual wall-elements, so that an object to be protected, especially a battery or car battery, may get the optimum protection against excessive, repeated and/or unwanted temperature variations.

Moreover, it should be noted that each wall-element and/or each plate and/or sheet of a preferably heat insulting material may comprise at least one protruding bead. A protruding bead in the sense of the present invention may thereby be any bead and/or bulge and/or embossment, which protrudes from a wall-element. Protruding from a wall-element in the sense of the present invention may mean that it may be outstanding, overhanging and/or projecting from this wall-element and/or that it may extend beyond at least one edge of this wall-element. The cross section of a protruding bead may thereby have any appropriated design. In some embodiments of the present invention, the cross section of a protruding bead may for example be semi-circular, semi-ellipsoidal, square like, rectangular or even square like or rectangular respectively with one semi-circular or semi-ellipsoidal end.

The thickness of a protruding bead may thereby be comprised for example between 1 mm and 40 mm, preferably between 1,5 mm and 30 mm, further preferred between 2 mm and 20 mm, further preferred between 2,5 mm and 10 mm, further preferred 3 and 6 mm. The protruding bead(s) may thereby comprise a heat insulating material. The protruding bead(s) may thereby preferably comprise the same heat insulating material as the heat insulating material used for the wall-elements and/or the plate(s) and/or sheet(s) of a heat insulating material. If the heat insulating material is compressible, an increasing thickness may allow to accommodate some production tolerances or some variations concerning the dimensions of an object to be protected, especially a battery or car battery, as well as concerning the dimensions of the protective jacket, although allowing a good fitting of the protective jacket on an object to be protected, especially a battery or car battery. This may allow a quick and easy placement of the protective jacket.

The protruding beads may each have the same or different thickness. Moreover, at least one part of at least one protruding bead may have a different thickness than at least one other part of this protruding bead. This allows more flexibility concerning the design of the protruding bead(s) to obtain a good fitting of the protective jacket to an object to be protected, especially a battery or car battery.

In some further embodiment of the protective jacket according to the present invention, at least one protruding bead, preferably at least two or even more preferred all protruding bead(s), which may be parallel and preferably adjacent to an upper and/or lower edge of the protective jacket, may comprise an increased thickness near the corner(s) of the protective jacket preferably in at least one region with a reduced thickness of the plate(s) and/or sheet(s) of a heat insulating material used for the protective jacket, so that the protruding bead(s) may be preferably for example thicker near the corner(s) of the protective jacket compared to the part(s) of the protruding bead(s) located at greater distance from the corners. The protruding beads, especially the protruding beads, which may be parallel and preferably adjacent to an upper and/or lower edge of the protective jacket and/or of two joining wall-elements and/or of two joining plates and/or sheets of a heat insulating material used for the protective jacket, may thus come in contact and/or even slightly overlap near the corners of the protective jacket, which may preferably correspond to a region with a reduced thickness of the protective jacket and/or of the plate(s) and/or sheet(s) of a heat insulating material used for the protective jacket. This may allow a good and/or close contact between the protruding bead(s), especially the protruding beads, which may be parallel and preferably adjacent to an upper and/or lower edge of the protective jacket and/or of at least one wall-element of the protective jacket and/or of at least one plate and/or sheet of a heat insulating material, and at least one part of an object to be protected, especially a battery or car battery, preferably along the whole protruding bead(s) and/or along the whole edge(s) of at least one wall-element and/or along the whole edge(s) of at least one plate and/or sheet of a heat insulating material used for the protective jacket and/or along the edge(s) of at least one wall-element and/or of at least one plate and/or sheet of a heat insulating material from at least one protruding bead to at least another protruding bead and even in the corners of the protective jacket, which may preferably correspond to a region with reduced thickness of the protective jacket and/or of the plate(s) and/or sheet(s) of a heat insulating material used for the protective jacket. This may increase the efficiency of the protection of an object to be protected, especially a battery or car battery, against excessive, repeated and/or unwanted temperature variations, because at least one layer of air formed between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, may thus be well insulated from the outside, so that an excellent heat insulation may be achieved, even in the corners of the protective jacket, which may preferably correspond to a region with reduced thickness of the protective jacket and/or of the plate(s) and/or sheet(s) of a heat insulating material used for the protective jacket, where the contact between a protruding bead and especially a protruding bead, which may be parallel and preferably adjacent to an upper and/or lower edge of the protective jacket, may thus not be optimal. An air layer, which may be well insulated from the outside, in the sense of the present invention may thereby mean the that air layer may be completely separated from the outside, so that no air may pass from the outside to the air layer and/or from the air layer to the outside. This may be preferably achieved for example by providing protruding beads arranged parallel and preferably adjacent to the upper and/or lower edge of each wall-element, so that each of these protruding beads may be in contact with the object to be protected, along the whole protruding bead. This means that these protruding beads may be all completely in contact with the object to be protected, so that at least one air layer, which is well insulated from the outside may be formed.

In some further preferred embodiment of the present protective jacket, the cross section of a protruding bead may have a shape, so that it facilitates the engagement of the protective jacket on an object to be protected, especially a battery or car battery. This may for example be done by using a protruding bead, which starts thin at a side directed toward an edge, that may be considered as being parallel to the protruding bead, and becomes thicker when the distance to this edge increases. Such a protruding bead may for example have a cross-section, which may at least approximately correspond to a triangular and especially a right-angled triangle like cross section. The placement of the protective jacket on an object to be protected, especially a battery or car battery, may thereby become easier and quicker using this kind of bead design.

Furthermore, each protruding bead should be arranged to be directed towards the inside of the protective jacket, so that each protruding bead may face an object to be protected, especially a battery or car battery, on which the protective jacket may be placed to ensure protection against excessive, repeated and/or unwanted temperature variations. The protective jacket thus keeps often at least partially in contact with an object to be protected, especially a battery or car battery, by an at least partial contact between at least one protruding bead of the protective jacket and at least one part of an object to be protected, and especially at least one part of a battery or car battery.

In addition, each protruding bead, which may be at least partially in contact with an object to be protected, especially a battery or car battery, may thus contribute to the formation of at least one air layer, which may be preferably well insulated from the outside, between the protective jacket placed on an object to be protected, especially a battery or car battery, and an object to be protected, especially a battery or car battery, especially between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed. This/these air layer(s), which may be preferably well insulated from the outside, may improve the protection against excessive, repeated and/or unwanted temperature variations provided by the protective jacket, as air may be considered as providing a very good heat insulation.

In some embodiments of the present invention, each wall-element and/or each plate and/or sheet of a heat insulating material may comprise at least two protruding beads, so that each protruding bead, which may be at least partially in contact with an object to be protected, especially a battery or car battery, may thus contribute to the formation of at least one air layer, which may be preferably well insulated from the outside, between the protective jacket placed on an object to be protected, especially a battery or car battery, and the object to be protected, especially a battery or car battery, especially between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed. This/these air layer(s) may improve the protection against excessive, repeated and/or unwanted temperature variations provided by the protective jacket, as air may be considered as providing a good heat insulation.

In some embodiments of the present invention, at least one protruding bead may be arranged near to at least one edge of at least one wall-element and/or near to at least one edge of at least one plate and/or sheet of a heat insulating material used for the protective jacket. Arranged near to an edge of at least one wall-element and/or of at least one plate and/or sheet of a heat insulating material used for the protective jacket may mean on this edge of at least one wall-element and/or of at least one plate and/or sheet of a heat insulating material used for the protective jacket or along this edge of at least one wall-element and/or of at least one plate and/or sheet of a heat insulating material used for the protective jacket or beside this edge of at least one wall-element and/or of at least one plate and/or sheet of a heat insulating material used for the protective jacket or even adjacent to this edge of at least one wall-element and/or of at least one plate and/or sheet of a heat insulating material used for the protective jacket. This may mean that at least one protruding bead may either be located at a certain distance of an edge of at least one wall-element and/or of at least one plate and/or sheet of a heat insulating material used for the protective jacket or preferably that at least one protruding bead may be alternatively adjacent to at least one edge of at least one wall-element and/or of at least one plate and/or sheet of a heat insulating material used for the protective jacket. Adjacent to an element of the protective jacket for example to an edge, to a link, to a region with a reduced thickness or to a pleated region may mean located directly next to this element of the protective jacket, so that the element of the protective jacket is bordered. The location of the protruding bead(s) may determine which part of an object to be protected, especially a battery or car battery, may be protected against excessive, repeated and/or unwanted temperature variations by at least one air layer, which may be preferably well insulated from the outside, especially by at least one air layer, which may be preferably well insulated from the outside, formed between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed.

To get an optimum protection of an object to be protected it may be advantageous when the part of the object to be protected, especially the battery or a car battery, by at least one air layer, which may be preferably well insulated from the outside, may be as big as possible, so that the protection against excessive, repeated and/or unwanted temperature variations becomes as good as possible. The protruding bead(s) may therefore preferably be arranged adjacent to at least one edge of at least one wall-element and/or of at least one plate and/or sheet of a heat insulating material used for the protective jacket, while it/they may keep at least partially in contact with at least a part of an object to be protected, especially a battery or car battery, when the protective jacket is placed on an object to be protected. A location of the protruding bead(s) adjacent to at least one edge of at least one wall-element and/or of at least one plate and/or sheet of a heat insulating material used for the protective jacket, while it/they may keep at least partially in contact with at least a part of an object to be protected, especially a battery or car battery, when the protective jacket is placed on the object to be protected may thus allow to increase the efficiency of the protection of an object to be protected, especially a battery or car battery, which may be protected by at least one air layer formed especially between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, because being located adjacent to an/the edge(s) of at least one wall-element and/or of at least one plate and/or sheet of a heat insulating material used for the protective jacket the protruding bead(s) may be located at the maximum distance of the opposite edge and may thus contribute to the formation of (an) air layer(s), which may be preferably well insulated from the outside, over the biggest possible surface.

In some embodiments of the present protective jacket at least one protruding bead may be arranged parallel to at least one edge of at least one wall-element and/or of at least one plate and/or sheet of a heat insulating material used for the protective jacket, which may preferably be the upper and/or the lower edge of at least one wall-element and/or of at least one plate and/or sheet of a heat insulating material used for the protective jacket. An arrangement of the protruding bead(s) parallel to at least one edge of one wall-element may be easy to produce, as a sheet or/plate of a heat insulating material may be easily produced for example by extrusion through an appropriate nozzle, so that at least one protruding bead may be arranged parallel to at least one edge of at least one wall-element and/or of at least one plate and/or sheet of a heat insulating material used for the protective jacket.

Moreover, the protruding bead(s) may be arranged parallel to the upper and/or lower of at least one wall-element, this may allow the protruding bead(s) to contribute to the formation of at least one air layer, which may be preferably well insulated from the outside, between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed

The upper or lower edge(s) of the protective jacket and/or of a/the wall-element(s) of the protective jacket and/or of a/the plate(s) and/or sheet(s) of a heat insulating material used for the protective jacket according to the present invention may refer to the edge(s), which may be respectively close or preferably as close as possible to the upper or lower part of an object to be protected, especially a battery or car battery, when the protective jacket is placed on an object to be protected, especially a battery or car battery. Moreover, the right or left edge(s) of a/the wall-element(s) of the protective jacket and/or of a/the plate(s) and/or sheet(s) of a heat insulating material used for the protective jacket according to the present invention may refer to the edge(s) which may be perpendicular to the upper and/or lower edge(s), while being located respectively on the right and on the left side of a/the wall-element(s) of the protective jacket and/or of a/the plate(s) and/or sheet(s) of a heat insulating material used for the protective jacket.

In some embodiments of the protective jacket according to the present invention, at least one protruding bead may be arranged parallel to the right and/or left edge of at least one wall-element and/or of at least one plate and/or sheet of a heat insulating material preferably at a certain distance from the right and/or left edge of the wall-element(s) and/or of the plate(s) and/or sheet(s) of a heat insulating material. This/these protruding bead(s) may extend along the whole wall-element and/or along the whole one plate and/or sheet of a heat insulating material and/or from at least one protruding bead to at least another protruding bead. This may be used to define different compartments within at least one air layer, which may be preferably well insulated from the outside and formed between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed. A compartment may thus be any part of an air layer, which may be preferably well insulated from the outside and formed between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, which may be separated from at least one other part of this air layer, by at least one protruding bead, which may be at least partially in contact with at least one part of an object to be protected, especially a battery or car battery and preferably along the whole protruding bead. The formation of compartments may for example improve the efficiency of the protection of an object to be protected, especially a battery or car battery, against excessive, repeated and/or unwanted temperature variations, as the heat conduction within at least one formed and preferably well insulated air layer by heat convection may be reduced by forming compartments. To form compartments at least one protruding bead, which may be arranged parallel to the upper and/or lower edge of at least one wall-element and/or of at least one plate and/or sheet of a heat insulating material, may also cross at least one protruding bead, which may be arranged parallel to the left and/or right edge of at least one wall-element and/or of at least one plate and/or sheet of a heat insulating material.

In some embodiments of the protective jacket according to the present invention, at least one protruding bead may be arranged parallel especially near and/or preferably adjacent to each of the edges which may be linked together for example by gluing, by welding, by lamination with a linking layer or by any other suitable mean or technique to get a protective jacket according to the present invention. These edges may be preferably to the right and/or left edge of at least one wall-element and/or of at least one plate and/or sheet of a heat insulating material used for the protective jacket. This may mean that at least one and preferably at least one protruding bead(s) may be arranged parallel and preferably adjacent to one preferably to each link between at least two wall-elements and/or at least two plates and/or sheets of a heat insulating material, so that the protruding bead may be arranged near and/or preferably adjacent to a one preferably to each link between at least two wall-elements and/or at least two plates and/or sheets of a heat insulating material. Arranging at least one or preferably at least two protruding bead parallel to a one preferably to each link between at least two wall-elements and/or of at least two plates and/or sheets of a heat insulating material used for the protective jacket, provided for example by gluing, by welding, by lamination with a linking layer or by any other suitable mean or technique, so that when at least two protruding beads are provided at least one of these beads may be located on the right of the link and at least another may be located on the left of the link, while the protruding bead(s) extend(s) preferably along the whole link(s) and/or along the whole wall-element(s) and/or along the whole plate(s) and/or sheet(s) of a heat insulating material next and/or adjacent to the link(s)l and/or along the link(s) from at least one protruding bead to at least another protruding bead and that it keeps in contact, preferably along the whole link and/or along the whole wall-element and/or along the whole plate and/or sheet of a heat insulating material and/or along the link from at least one protruding bead to at least another protruding bead, with at least one part of an object to be protected, especially a battery or car battery, may increase the efficiency of at least one air layer, which may be preferably well insulated from the outside, formed between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, to protect an object to be protected against excessive, repeated and/or unwanted temperature variations. At least one and preferably at least two protruding beads arranged parallel and preferably adjacent to a link between at least two wall-elements and/or of at least two plates and/or sheets of a heat insulating material used for the protective jacket, so that when at least two protruding beads are provided at least one of these protruding beads may be located on the right of the link and at least another may be located on the left of the link, may limit the air layer(s), which may be preferably well insulated from the outside, formed on the left and/or on the right of this link between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, before reaching a link, so that this/these air layer(s) may be well insulated from the outside, even if the contact between the protective jacket and especially at least one protruding bead, preferably parallel and/or adjacent to at least one upper and/or lower edge of at least one wall-element of the protective jacket, and at least one part of the object to be protected, especially the battery or car battery may not be optimal at the link between at least two wall-elements and/or of at least two plates and/or sheets of a heat insulating material used for the protective jacket. The air layer(s), which may be preferably well insulated from the outside, formed on the left and/or on the right of a link may thus be limited by at least one protruding bead arranged parallel preferably adjacent to this link before reaching the link, where the contact between the protective jacket and especially at least one protruding bead preferably arranged parallel and/or adjacent to an upper and/or lower edge of the protective jacket and/or of at least one wall-element and/or of at least one plate and/or sheet of a heat insulating material and at least one part of an object to be protected, especially a battery or car battery, may not be optimal, because a link may correspond to a region of a plate and/or sheet of a heat insulating material with a reduced thickness. As the protruding beads, which are preferably in contact with at least one part of an object to be protected, especially a battery or car battery, along the whole protruding bead(s) and/or along the whole link(s) and/or along the whole wall-element(s) and/or along the whole plate(s) and/or sheet(s) of a heat insulating material used for the protective jacket next and/or adjacent to the link(s)and/or along the link(s) from at least one protruding bead to at least another protruding bead, are arranged parallel and preferably adjacent to one and preferably each link, so that when at least two protruding beads parallel and preferably adjacent to a link between two edges of at least two wall-element and/or of at least two plates and/or sheets of a heat insulating material used for the protective jacket are provided at least one of these protruding beads may be located on the right of the link and at least another may be located on the left of the link, the air layer(s), which may be preferably well insulated from the outside, eventually formed at one and preferably at both sides of this link may be limited by at least one protruding bead arranged parallel and preferably adjacent to this link, so that the insulation of the air layers formed on one or preferably on both sides of a link from the outside may be achieved, even if the contact between the protective jacket and especially at least one protruding bead, preferably parallel and preferably adjacent to the upper and/or lower edge of at least one wall-element of the protective jacket, and the object to be protected, especially the battery or car battery, may not optimal at the link. This allows to increase the efficiency of the protection of an object to be protected, especially a battery or car battery, which may be protected by at least one air layer that may be preferably insulated from the outside, because the air layer formed on one and preferably on both sides of a link between at least two wall-elements and/or of at least two plates and/or sheets of a heat insulating material used for the protective jacket may be limited by the at least one protruding bead arranged parallel and preferably to this link, so that this/these air layer(s) may not reach the link(s), where the contact between the protective jacket and especially at least one protruding bead preferably arranged parallel and preferably adjacent to at least one upper and/or lower edge of at least one wall-element of the protective jacket, and at least one part of the object to be protected, especially the battery or car battery may not be optimal at the link between at least two wall-elements and/or of at least two plates and/or sheets of a heat insulating material used for the protective jacket and at least one part of an object to be protected, especially a battery or car battery, may not be optimal, because each link may correspond to a region of a plate and/or sheet of a heat insulating material with a reduced thickness. This may increase the efficiency of the protection of an object to be protected, especially a battery or car battery, against excessive, repeated and/or unwanted temperature variations, because the layer of air formed between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, may thus be very well insulated from the outside even near a link, so that an excellent heat insulation may be achieved.

In some embodiments of the present invention at least two protruding beads may be arranged parallel and preferably adjacent to the upper and/or lower edge of at least one wall-element and/or at least one plate and/or sheet of a heat insulating material and preferably of all the wall-elements and/or of all plates and/or sheets of a heat insulating material, preferably, so that at least one protruding bead may be arranged preferably adjacent to the upper edge of at least one wall-element and/or at least one plate and/or sheet of a heat insulating material and preferably of all wall-elements and/or of all plates and/or sheets of a heat insulating material and that at least another protruding bead may be arranged preferably adjacent to the lower edge of the same wall-element and/or of the same plate and/or sheet of a heat insulating material and preferably of all wall-elements and/or all plates and/or sheets of a heat insulating material. This allows to contribute to the formation of at least one air layer between at least one wall-element or preferably all wall-elements of the protective jacket placed on an object to be protected, especially a battery or car battery, the object to be protected, especially a battery or car battery, and the at least two protruding beads of this and preferably of all wall-element(s) and/or plate(s) and/or sheet(s) of a heat insulating material, of which at least one may be parallel and preferably adjacent to the upper edge and the other may be parallel and preferably adjacent to the lower edge of this wall-element and/or of this plate and/or sheet of a heat insulating material and preferably of all wall-elements and/or of all plates and/or sheets of a heat insulating material.

In addition, other protruding beads arranged parallel to at least one upper and/or lower edge of at least one wall-element and/or of at least one plate and/or sheet of a heat insulating material and/or arranged parallel to the left and/or right edge of at least one wall-element and/or of at least one plate and/or sheet of a heat insulating material may be provided to define some compartments within at least one air layer formed between at least one wall-element of the protective jacket placed on an object to be protected, especially a battery or car battery, the object to be protected, especially the battery or car battery, and the at least two protruding beads of this and preferably of all wall-element(s) and/or plate(s) and/or sheet(s) of a heat insulating material, of which at least one may be arranged parallel and preferably adjacent to the upper edge and at least another may be arranged parallel and preferably adjacent to the lower edge of the this wall-element and/or plate and/or sheet of a heat insulating material and preferably of all wall-elements and/or of all plates and/or sheets of a heat insulating material.

A protective jacket with at least two protruding beads arranged parallel and preferably adjacent to the upper and/or lower edge of at least one wall-element and/or at least one plate and/or sheet of a heat insulating material and preferably of all the wall-elements and/or preferably of all plates and/or sheets of a heat insulating material, preferably, so that at least one protruding bead may be arranged adjacent to the upper edge of at least one wall-element and/or of at least one plate and/or sheet of a heat insulating material and preferably of all wall-elements and/or of all plates and/or sheets of a heat insulating material and that at least another protruding bead may be arranged adjacent to the lower edge of this wall-element and/or of this plate and/or sheet of a heat insulating material and preferably of all wall-elements and/or of all plates and/or sheets of a heat insulating material, may allow the protective jacket to be placed on the object to be protected very quickly and easily, because there may be no need to place the jacket in a certain special way or for example to turn the protective jacket to place protruding bead in a certain way to get at least one air layer, which may be preferably well insulated from the outside. This may however be desired when only one protruding bead arranged parallel and preferably adjacent to the upper or lower edge of at least one wall-element and/or of at least one plate and/or sheet of a heat insulating material and preferably of all the wall-elements and/or of all plates and/or sheets of a heat insulating material may be provided, because it may then be desired to turn the protective jacket, so that the protruding bead may be located close to the upper side of an object to be protected, especially a battery or car battery, to allow the protruding bead to contribute to the formation of at least one air layer, which may be preferably well insulated from the outside, between at least one wall-element preferably between all the wall-elements of the protective jacket placed on an object to be protected, especially a battery or car battery, at least one protruding bead of this wall-element preferably of each wall-element located close to the upper side of an object to be protected, especially a battery or car battery, the object to be protected and the surface, on which an object to be protected, especially a battery or car battery, may be placed. However, if only one protruding bead arranged parallel and preferably adjacent to the upper or the lower edge of at least one wall-element and/or of at least one plate and/or sheet of a heat insulating material and preferably of all the wall-elements and/or of all plates and/or sheets of a heat insulating material may be provided, it may also be possible to turn the protective jacket, so that the protruding bead may be located close to the lower side of an object to be protected, especially a battery or car battery, to allow the heated air to escape by convection from at least one air layer, which is not insulated from the outside, formed between at least one wall-element and the object to be protected. This may permit to cool the object to be protected.

In some embodiments of the protective jacket according to the present invention at least one, preferably two, further preferred three, further preferred four and even further preferred all protruding bead(s) extend(s) from at least one edge of at least one wall-element and/or at least one plate and/or sheet of a heat insulating material to at least another edge of this wall-element and/or of this plate and/or sheet of a heat insulating material. This helps in contributing to the formation of at least one air layer, which may be preferably well insulated from the outside, between at least one wall-element of the protective jacket placed on an object to be protected, especially a battery or car battery, at least one protruding bead of this wall-element, the object to be protected and at least an other protruding bead of this wall-element or the surface, on which an object to be protected, especially a battery or car battery, may be placed, because (a) protruding bead(s), which extend(s) from one edge of at least one wall-element and/or at least one plate and/or sheet of a heat insulating material to another edge of this wall-element and/or of this plate and/or sheet of a heat insulating material may help to keep contact between the protruding bead and the object to be protected, especially the battery or car battery, efficiently and preferably along the whole protruding bead(s) and/or along the whole edge(s) of the wall-element(s) and/or of the plate(s) and/or sheet(s) of a heat insulating material and/or along the edge of the wall-element(s) and/or of the plate(s) and/or sheet(s) of a heat insulating material from at least one protruding bead to at least another protruding bead, thus improving the protection against excessive, repeated and/or unwanted temperature variations and the insulating properties of an air layer, by improving the efficiency of the insulation of the air layer from the outside. In some embodiments of the present invention extending from at least one edge of at least one wall-element and/or of at least one plate and/or sheet of a heat insulating material to at least another edge of this wall-element and/or of this plate and/or sheet of a heat insulating material and/or along the whole edge(s) of the wall-element(s) and/or of the plate(s) and/or sheet(s) of a heat insulating material may especially for protruding beads, which are not arranged parallel to the upper and/or lower edge of at least one wall-element, mean from at least one protruding bead to at least another protruding bead.

A heat insulating material in the sense of the present invention may be any material which achieves an insulation of one side of this material against heat produced/located on the other side of this material. In preferred embodiment of the present invention a heat insulating material may be any kind of polymeric material, comprising for example elastomers, especially rubber, or thermoplastics or even thermoplastic elastomers or thermoset polymers, which may achieve insulation against heat, as most polymer materials do not transmit heat very well.

In some embodiments of the protective jacket according to the present invention each wall-element may comprise at least one foamed material and especially preferred a polymeric foam. This means that the heat insulating material used for a/the wall-element(s) may be a at least one foamed material and especially preferred a polymeric foam and/or that at least one foamed material and especially preferred a polymeric foam me be used in addition to the heat insulating material used for a/the wall-element(s). This may be useful as foamed materials and/or polymeric foams may considered to provide very good heat insulating properties, thus allowing a very good protection of an object to be protected, especially a battery or car battery against excessive, repeated and/or unwanted temperature variations.

In some further preferred embodiment of the present invention, the polymeric foam may be a polyolefin foam or a foam comprising polyolefin copolymers and especially for example a polyethylene or polypropylene foam or a foam comprising copolymers of ethylene and propylene. This may be useful as this kind of foams foam may be considered as providing excellent heat insulating properties as well as an eventually desired strength, stability, flexibility and/or compressibility, thus allowing an even better protection of an object to be protected, especially a battery or car battery, against excessive, repeated and/or unwanted temperature variations.

In some further preferred embodiment of the protective jacket according to the present invention at least one protruding bead, preferably two protruding beads, further preferred at least two protruding beads arranged parallel and preferably adjacent to the upper and/or lower edge, so that at least one protruding bead may be arranged adjacent to the upper edge and that at least another protruding bead may be arranged adjacent to the lower edge of each wall-element and even further preferred all the protruding beads of each wall-element and/or of each plate and/or sheet of a heat insulating material may be (an) inherent part(s) of this wall-element and/or of this plate and/or sheet of a heat insulating material. This further facilitates the placement of the protective jacket on an object to be protected, especially a battery or car battery, because there may be neither a need to fix (a) protruding bead(s) to wall-element(s) nor a need to verify if this fixation is correct and sufficient. Preferably no parts of the protective jacket have to be assembled, fixed together or to something else, glued together or to something else, welded together or with something else during and/or after the placement of the protective jacket, so that preferably no assembling, fixing, gluing or welding step or the like of may therefore be required during and/or after the placement of the protective jacket. The placement of the protective jacket is thereby further facilitated.

In some further preferred embodiment of the protective jacket according to the present invention, the protective jacket and/or a plate and/or sheet of a heat insulating material used for the protective jacket comprises at least one region with a reduced thickness. This may mean that the plate(s) and/or sheet(s) of a heat insulating material used for the protective jacket may comprise at least one region with a thickness, which may be reduced compared to the thickness of at least one other region of the plate(s) and/or sheet(s) of a heat insulating material used for the protective jacket. A region may thereby be any part of a sheet and/or plate of a heat insulating material. However, the region(s) with a reduced thickness may preferably be perpendicular to the upper and/or lower edge of the protective jacket and/or of at least one wall-element and/or of at least one plate and/or sheet of a heat insulating material. The reduction of thickness may thereby for example be provided by cutting preferably vertically into a plate and/or sheet of a heat insulating material, preferably a polymeric foam and even more preferred a polypropylene foam, until a certain depth but without cutting through it or by applying pressure and/or heat to the heat insulating material, locally in a region, so that it's thickness becomes reduced in this region and that it remains reduced even after the compression and/or the application of heat stopped. The reduction of thickness for example by cutting and/or compressing (with or without applying heat) may thereby for example be achieved by cutting into or applying pressure and or heat only to one or on the other side of the plate(s) and/or sheet(s) of a heat insulating material, preferably a polymeric foam and even more preferred a polypropylene foam, depending on the folding which may be desired and especially depending on the direction to which the folding should occur and/or may be desired. The reduction of thickness may thus occur preferably only on the side of the of the plate(s) and/or sheet(s) of a heat insulating material which may be preferably opposite to the direction and/or side to which the folding should occur and/or may be desired, so that the folding in this direction and/or to this side may be facilitated.
Moreover, the cutting may be made vertically or with a certain angle. When the cutting is made with a certain angle it may be possible to cut a prismatic piece with a triangular base out of the preferably heat insulting material by making two cuttings until a certain depth without cutting through the heat insulating material, so that two slants are formed to reduce the thickness in a given region of the plate and/or sheet of the heat insulating material. This/these region(s) with a reduced thickness may preferably become the fold(s) separating different wall-elements, so that the region(s) with a reduced thickness may act as some articulation(s) between different wall-element. The region with a with a reduced thickness may facilitate the folding of the plate(s) and/or sheet(s) of a heat insulating material, which may be required to define the wall-elements of the protective jacket and/or to form a pleated region.

In some further embodiments of the protective jacket according to the present invention, at least one and preferably at least two protruding beads may be arranged parallel and preferably adjacent to a and preferably each region with a reduced thickness, so that when at least two protruding beads are provided at least one of these protruding beads may be located on the right of the region(s) with a reduced thickness and at least another may be located on the left of the region(s) with a reduced thickness. Arranging at least one or preferably at least two protruding bead(s) parallel and preferably adjacent to a and preferably each region with a reduced thickness, so that when at least two protruding beads are provided at least one of these beads may be located on the right of the region(s) with a reduced thickness and at least another may be located on the left of the region(s) with a reduced thickness and that the protruding bead(s) extend(s) preferably along the whole region(s) with a reduced thickness and/or along the whole wall-element and/or along the whole plate and/or sheet of a heat insulating material next and/or adjacent to the region(s) with a reduced thickness and/or along the region(s) with a reduced thickness from at least one protruding bead to at least another protruding bead and that it keeps in contact, preferably along the whole protruding bead(s) and/or along the whole region(s) with a reduced thickness and/or along the whole wall-element(s) and/or along the whole plate(s) and/or sheet(s) of a heat insulating material next and/or adjacent to the region(s) with a reduced thickness and/or from at least one protruding bead to at least another protruding bead, with at least one part of the object to be protected, especially the battery or car battery, may increase the efficiency of at least one air layer, which may be preferably well insulated from the outside, formed between at least one wall-element of the protective jacket placed on the object to be protected, especially the battery or car battery, at least one protruding bead of this wall-element, the object to be protected and at least one other protruding bead of this wall-element or the surface, on which the object to be protected, especially the battery or car battery, may be placed, to protect an object to be protected, especially a battery or car battery, against excessive, repeated and/or unwanted temperature variations. At least one and preferably at least two protruding beads arranged parallel and preferably to a region with a reduced thickness, so that when at least two protruding beads are provided at least one of these protruding beads may be located on the right of the region(s) with a reduced thickness and at least another may be located on the left of the region(s) with a reduced thickness, may limit the air layer(s), which may be preferably well insulated from the outside, formed on the left and/or on the right of a region with a reduced thickness between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, before reaching such a region with a reduced thickness, so that the air layer(s), may be well insulated from the outside, even if the contact between the protective jacket and especially at least one protruding bead, preferably parallel and/or adjacent to the upper and/or lower edge of at least one wall-element of the protective jacket, crossing a region with a reduced thickness may not be optimal. The air layer(s), which may be preferably well insulated from the outside, formed on the left and/or on the right of a region with a reduced thickness may be limited by at least one protruding bead arranged parallel and preferably adjacent to this region with a reduced thickness before reaching such a region, where the contact between the protective jacket and especially at least one protruding bead crossing a region with a reduced thickness and at least one part of an object to be protected, especially a battery or car battery, may not be optimal. As the protruding bead(s), which may preferably be in contact with at least one part of an object to be protected, especially a battery or car battery, along the whole protruding bead(s) and/or along the whole region(s) with a reduced thickness and/or along the whole wall-element(s) and/or along the whole plate(s) and/or sheet(s) of a heat insulating material next and/or adjacent to the region(s) with a reduced thickness and/or along the region(s) with a reduced thickness from at least one protruding bead to at least another protruding bead, are arranged parallel and preferably adjacent to a and preferably each region with a reduced thickness, so that when at least two protruding beads parallel and preferably adjacent to a region with a reduced thickness are provided at least one of these protruding beads may be located on the right of the region(s) with a reduced thickness and at least another may be located on the left of the region(s) with a reduced thickness, the air layer(s), which may be preferably well insulated, formed at one and preferably at both sides of this region with a reduced thickness may be limited by at least one protruding bead arranged parallel and preferably adjacent to this region with a reduced thickness, so that the insulation of the air layers formed on one or preferably on both sides of a region with a reduced thickness from the outside may be achieved, even if the contact between the protective jacket and especially at least one protruding bead, preferably parallel and preferably adjacent to the upper and/or lower edge of at least one wall-element of the protective jacket and/or of at least one plate and/or sheet of a heat insulating material, crossing a region with a reduced thickness may not be optimal. This allows to increase the part of an object to be protected, especially a battery or car battery, which may be protected by at least one air layer that may be preferably well insulated from the outside, because the air layer(s) formed on one and preferably on both sides of a region with a reduced thickness may be limited by the at least one protruding bead arranged parallel and preferably adjacent to this region with a reduced thickness, so that this/these air layer(s) may not reach this region with a reduced thickness, where the contact between the protective jacket and especially at least one protruding bead crossing a region with a reduced thickness and at least one part of an object to be protected, especially a battery or car battery, may not be optimal. This may increase the efficiency of the protection of an object to be protected, especially a battery or car battery, against excessive, repeated and/or unwanted temperature variations, because the air layer, which may be preferably well insulated from the outside, formed between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, may thus be very well insulated from the outside, so that an excellent heat insulation may be achieved.

In some further preferred embodiment of the protective jacket according to the present invention, the protective jacket comprises at least one additional layer. This/these additional layer(s) may be useful as linking layer(s), additional heat insulating layer(s) or as layer(s) providing a nice finish. This/these optional additional layer(s) may also facilitate the welding, since they may reduce the sticking of the preferably heat insulating material to the tool(s) used for applying heat and/or pressure during the welding. The additional layer(s) comprise for example a polymeric foil, a metallic foil, an additional layer of a foamed material especially a polymeric foam, a cloth layer, a woven layer or a non-woven layer, especially a felt layer. This/these additional layer may be fixed o the insulating material by laminating the insulating material and/or the additional layer(s) together, by applying pressure and/or heat.

In some further preferred embodiment of the protective jacket according to the present invention, the protective jacket comprises at least one pleated region. A pleated region in the sense of the present invention may be any part of the protective jacket were a plate and/or sheet of a heat insulating material may be folded, so that small parts of this plate and/or sheet of a heat insulating material are folded one on another to form an accordion like structure, which may unfold to a certain extend under pulling and may return to a certain extend to it's folded state once the pulling stops. This/these pleated regions may extend to some extend for example under pulling and retract to some extend for example after the pulling stopped, so that the protective jacket may fit on objects the be protected, especially batteries or car batteries of different dimensions. The difference(s) concerning the dimensions of an object to be protected, especially of a battery or car battery which may be accommodated may result from production tolerances during the production of an object to be protected, especially a battery or car battery, or simply from using objects to be protected, especially batteries or car batteries of various dimensions. Moreover, differences concerning the dimensions of an object to be protected, especially of a battery or car battery which may be accommodated may depend of the on the number of pleated regions, on the size of each the pleated region, on the size of the parts of the plate and/or sheet of a heat insulating material, which are folded one on to another, to form the pleated region and/or on the number of pleats. Increasing the number of pleated regions, the size of at least one pleated region, the size of the parts of the plate and/or sheet of a heat insulating, which are folded one on to another, to form the pleated region and/or on the number of pleats increases the difference concerning the dimensions of an object to be protected, especially of a battery or car battery which may be accommodated. A protective jacket comprising at least one pleated region may thus be very easily and quickly placed on object to protected, especially batteries or car batteries of different dimensions, while keeping a good contact between at least one part of the protective jacket and especially at least one part of at least one protruding bead preferably along the whole protruding bead and at least one part of an object to be protected, especially a battery or car battery.

In some preferred embodiments of the protective jacket according to the present invention, the pleated region(s) may be located at a/the corner(s) of the protective jacket. This may allow to fold the plate(s) and/or sheet(s) of a heat insulating material to define at least two wall-elements along this/these pleated region(s) without the need for at least one region of the plate(s) and/or sheet(s) of a heat insulating material used for the protective jacket with a reduced thickness. This may simplify the design and the production of the protective jacket according to the present invention.

Furthermore, in some preferred embodiment of the protective jacket at least one protruding bead and preferably all protruding beads keep in contact along their whole length and/or along the whole upper and/or lower edge of the protective jacket placed on an object to be protected, especially a battery or car battery, and/or along the whole upper and/or lower edge of at least one wall-element and/or of at least one plate and/or sheet of a heat insulating material used for the protective jacket and/or from at least one protruding bead to at least another protruding bead with at least one part of an object to be protected, especially a battery or car battery. This may increase the efficiency of the protection of an object to be protected, especially a battery or car battery, against excessive, repeated and/or unwanted temperature variations, because the layer of air formed between at least one wall-element of the protective jacket and/or plate and/or sheet of a heat insulating material used for the protective jacket placed on an object to be protected, especially a battery or car battery, at least one protruding bead of this wall-element and/or plate and/or sheet of a heat insulating material, the object to be protected and at least one other protruding bead of this wall-element or the surface, on which an object to be protected, especially a battery or car battery, may be placed, may thus be very well insulated from the outside, so that an excellent heat insulation may be achieved.

To provide a good and/or close contact between at least one part of the protective jacket and especially at least one protruding bead with at least one part of an object to be protected, especially a battery or car battery and to the keep the contribution of the protruding bead(s) to the formation of at least one air layer between at least one wall-element of the protective jacket placed on an object to be protected, especially a battery or car battery, at least one protruding bead of this wall-element, an object to be protected and at least one other protruding bead of this wall-element or the surface, on which an object to be protected, especially a battery or car battery, may be placed, even in a pleated region, one may reduce the size of the parts of the plate and or sheet of a heat insulating material, which are folded one on another to form the pleated region. The reduced size of the parts of a plate and/or sheet of a heat insulating material, which are folded one on another to form the pleated region may ensure a good and/or close fitting of the protective jacket on an object to be protected, especially a battery or car battery, simply because small parts of the plate and/or sheet of a heat insulating material, which are folded one upon another to form the pleated region allow to a better accommodation of the form of the object to be protected, especially a battery or car battery, because small parts may better wrap around an object to be protected, especially a battery or car battery and/or parts thereof. This may allow to get a better contact between at least one protruding bead of the protective jacket and an object to be protected, especially a battery or car battery, even in the pleated region, preferably, so that the protruding bead(s) keeps in contact with at least one part of an object to be protected, especially a battery or car battery, along the whole protruding bead(s) and/or along the whole pleated region(s) and/and or along the whole wall-element(s) and/or along the whole plate(s) and/or sheet(s) of a heat insulating material next and/or adjacent to the pleated region(s) and/or along the pleated region(s) from at least one protruding bead to at least another protruding bead. The protruding bead(s) may thus contribute to the formation of at least one air layer, which may be preferably well insulated from the outside, between at least one wall-element of the protective jacket placed on an object to be protected especially a battery or car battery, at least one protruding bead of this wall-element, the object to be protected and at least one other protruding bead of this wall-element or the surface, on which an object to be protected, especially a battery or car battery, may be placed, even in the pleated region. This may increase the protection of an object to be protected, especially a battery or car battery, against excessive, repeated and/or unwanted temperature variations, especially in a pleated region.

In some further embodiments of the protective jacket according to the present invention, at least one and preferably at least two protruding beads may be arranged parallel and preferably adjacent to a and preferably each pleated region, so that when at least two protruding beads are provided at least one of these protruding beads may be located on the right of the pleated region(s) and at least another may be located on the left of the pleated region(s). Arranging at least one or preferably at least two protruding beads parallel to a and preferably each pleated region, so that when at least two protruding beads are provided at least one of these protruding beads may be located on the right of the pleated region(s) and at least another may be located on the left of the pleated region(s) and that the protruding beads extend(s) preferably along the whole pleated region(s) and/or along the whole wall-element(s) and /or along the whole plate(s) and/or sheet(s) of a heat insulating material next and/or adjacent to the pleated region(s) and/or along the pleated region(s) from at least one protruding bead to at least another protruding bead and that it keeps in contact, preferably along the whole protruding bead(s) and/or along the whole pleated region(s) and/or along the whole wall-element(s) and /or along the whole plate(s) and/or sheet(s) of a heat insulating material next and/or adjacent to the pleated region(s) and/or along the pleated region(s) from at least one protruding bead to at least another protruding bead, with at least one part of an object to be protected, especially a battery or car battery, may increase the efficiency of at least one air, which may be preferably well insulated from the ourside, layer formed between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, to protect an object to be protected, especially a battery or car battery, against excessive, repeated and/or unwanted temperature variations. At least one and preferably at least two protruding beads arranged parallel and preferably adjacent to a pleated region, so that when at least two protruding beads are provided at least one of these protruding beads may be located on the right of the pleated region(s) and at least another may be located on the left of the pleated region(s), may limit the air layer(s), which may be preferably well insulated, formed on the left and/or on the right of a pleated region between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, before reaching such a region, so that the air layer(s), may be well insulated from the outside, even if the contact between the protective jacket and especially at least one protruding bead, preferably parallel and/or adjacent to the upper and/or lower edge of at least one wall-element of the protective jacket, crossing a region with a reduced thickness may not be optimal. The air layer(s), which may be preferably well insulated from the outside, formed on the left and/or on the right of a pleated region may be limited by at least one protruding bead arranged parallel and preferably adjacent to this pleated region before reaching such a region, where the contact between the protective jacket and especially at least one protruding bead crossing a pleated region and at least one part of an object to be protected, especially a battery or car battery, may not be optimal. As the protruding bead(s), which are preferably in contact with at least one part of an object to be protected, especially a battery or car battery, along the whole protruding bead(s) and/or along the whole pleated region(s) and/or along the whole wall-element(s) and/or along the whole plate(s) and/or sheet(s) of a heat insulating material next to the pleated region(s) and/or along the pleated region(s) from at least one protruding bead to at least another protruding bead, are arranged parallel and preferably adjacent to a and preferably each pleated region, so that when at least two protruding beads parallel and preferably adjacent to a pleated region are provided at least one of these protruding beads may be located on the right of the pleated region(s) and at least another may be located on the left of the pleated region(s), the air layer(s), which may be preferably well insulated from the outside, formed at one and preferably at both sides of this pleated region may be limited by at least one protruding bead arranged parallel and preferably adjacent to this pleated region, so that the insulation of the air layer(s) formed on one or preferably on both sides of a pleated region from the outside may be achieved, even if the contact between the protective jacket and especially at least one protruding bead, preferably parallel and/or adjacent to the upper and/or lower edge of at least one wall-element of the protective jacket and/or at least one plate and/or sheet of a heat insulating material used for the protective jacket, crossing a pleated region may not be optimal. This allows to increase the efficiency of the protection of an object to be protected, especially a battery or car battery, which may be protected by at least one air layer that may be well insulated from the outside, because the air layer(s), which may be preferably well insulated from the outside, formed on one and preferably on both sides of a pleated region may be limited by the at least one protruding bead arranged parallel and preferably adjacent to this pleated region, so that this/these air layer(s), which may be preferably well insulated from the outside, may not reach this pleated region, where the contact between the protective jacket and especially at least one protruding bead crossing a pleated region and at least one part of an object to be protected, especially a battery or car battery, may not be optimal. This may increase the efficiency of the protection of an object to be protected, especially a battery or car battery, against excessive, repeated and/or unwanted temperature variations, because the air layer, which may be preferably well insulated from the outside, formed between at least one wall-element of the protective jacket placed on an object to be protected, especially a battery or car battery, at least one protruding bead of this wall-element, the object to be protected and at least one other protruding bead of this wall-element or the surface, on which an object to be protected, especially a battery or car battery, may be placed, may thus be very well insulated from the outside, so that an excellent heat insulation may be achieved.

Moreover, the invention concerns a method for producing a protective jacket according to the present invention whereby at least one wall-element and/or plate and/or sheet of a heat insulating material used for the protective jacket comprising a protruding part may be extruded through an adequate nozzle, so that the protruding part belongs to this/these wall-element(s) and/or this plate(s) and/or sheet(s) of a heat insulating material used for the protective jacket. This may allow to very simply produce a/the wall-element(s) and/or the plate(s) and or sheet(s) of a heat insulating material used for the protective jacket. An adequate nozzle may mean that the nozzle allows to obtain a plate and/or sheet of a heat insulating material comprising at least one protruding bead with a desired cross-section, which may preferably be arranged parallel and/or adjacent to at least one edge of the plate and/or sheet of a heat insulating material. Furthermore, this ensures the protruding part are always correctly arranged and fixed on/to the wall-element(s) and/or to a/the plate(s) and/or sheet(s) of a heat insulating material. It also eliminates the need to assemble and/or fix the protruding part(s) and a/the wall-element(s) and/or the plate(s) and or sheet(s) of a heat insulating material in an additional production step and allows to achieve an quick and easy placement of the protective jacket, while ensuring an excellent protection against excessive, repeated and/or unwanted temperature variations.

In some preferred embodiments of the a method for producing a protective jacket according to the present invention, at least one wall-element and/or plate and/or plate and/or sheet of a heat insulating material used for the protective jacket comprising a protruding part may be extruded as foamed polymeric material, preferably as polyolefin foam or as foam comprising copolymers of polyolefins and especially as polyethylene or polypropylene foam or as foam comprising copolymers of polyethylene and polypropylene, through an adequate nozzle, so that the protruding part belongs to this/these wall-element(s) and/or to this/these plate(s) and/or sheet(s) of a heat insulating material. This may allow to get an excellent protection of an object to be protected, especially a battery or car battery, against excessive, repeated and/or unwanted temperature variations, because foamed polymeric materials and especially foamed polyethylene or polypropylene are excellent heat insulating materials.

In some other embodiments of a method for producing a protective jacket according to the present invention, at least one wall-element and/or plate and/or sheet of a heat insulating material used for the protective jacket may be laminated with at least one additional layer. The lamination may be performed by applying pressure and/or heat to at least a part of one wall-element and/or plate and/or sheet of a heat insulating material used for the protective jacket this/these additional layer(s) may comprise for example a polymeric foil, a metallic foil, an additional layer of a foamed material especially a polymeric foam, a cloth layer, a woven layer or a non-woven layer, especially a felt layer. This/these additional layer(s) may be for example useful as linking layer(s), as (an) additional heat insulating layer(s) or as a layer(s) providing a nice finish.

In some other embodiments of the method for producing a protective jacket according to the present invention, at least two wall-elements and/or at least two plate(s) and/or sheet(s) of the protective jacket are linked together for example by welding. The welding my be achieved by applying pressure and/or heat at least to one part of the two wall-elements and/or plate(s) and/or sheet(s) of the protective jacket. This may be a very easy and straightforward method of linking at least two wall-elements and/or plate(s) and/or sheet(s) of the protective jacket together and provides a strong and reliable linking.

Finally, the protruding beads, which may be arranged parallel to the right and/or left edge of at least one wall-element and/or of at least one plate and or sheet of a heat insulating material may be produced for example by compressing and/or applying heat (to) the heat insulating material and especially the preferably foamed material or even more preferred the preferably polymeric foam in at least one region and preferably in at least two regions located on both sides of the protruding bead to be formed, for example by applying pressure and/or heat, so that the thickness of the heat insulating material and especially the preferably foamed material or even more preferred the preferably polymeric foam may be reduced in this/these region(s), while the heat insulating material and especially the preferably foamed material or even more preferred the preferably polymeric foam does not return to it's initial state, thus allowing the formation of (a) protruding bead(s).

The figures show the following:

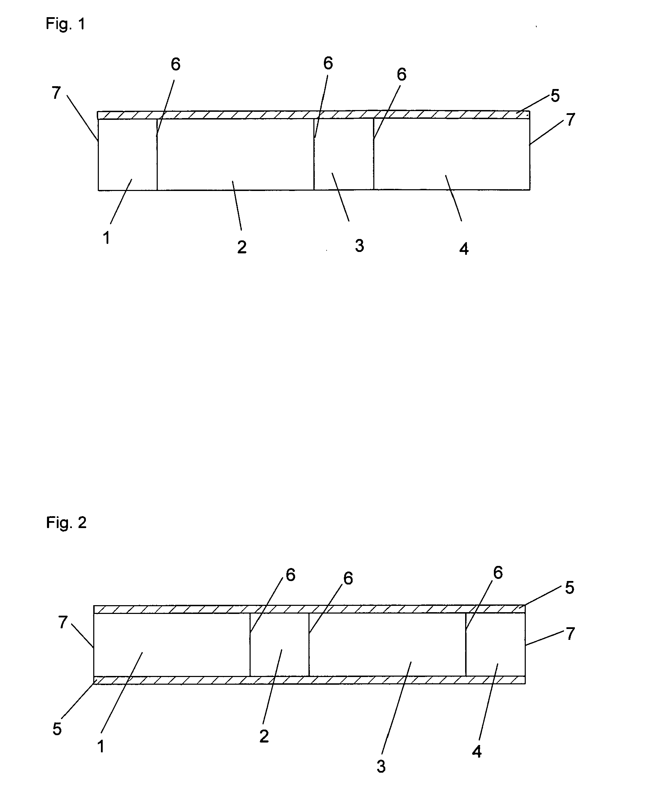

Figure 1 shows a schematic representation of a plate and/or sheet of a heat insulating material, preferably a polymeric foam and even more preferred a polypropylene foam, comprising four rectangular wall-elements (1,2,3 and 4), linked one to another simply because they are part of the same and/or sheet of a heat insulating material, preferably a polymeric foam and even more preferred a polypropylene foam. It may be noted that the plate and/or sheet of a heat insulating material comprises wall-elements of different dimensions. However, the wall-elements (1) and (3) as well as (2) and (4) have respectively the same dimensions. Moreover, the plate and/or sheet of a heat insulating material, preferably a polymeric foam and even more preferred a polypropylene foam, comprise a protruding bead (5), which is arranged parallel and adjacent to the upper edge of the protective jacket and/or of each wall-element and/or of the plate and/or sheet of a heat insulating material. Furthermore, this protruding bead (5) extends along the whole upper edge of the protective jacket and/or of each wall-element and/or of the plate and/or sheet of a heat insulating material. This protruding bead is an inherent part of the plate and/or sheet of a heat insulating material, preferably a polymeric foam and even more preferred a polypropylene foam, but protrudes from the plate and/or sheet of a heat insulating material, preferably a polymeric foam and even more preferred a polypropylene foam. The plate and/or sheet of a heat insulating material, preferably a polymeric foam and even more preferred a polypropylene foam, comprises also three regions with a reduced thickness (6), which allows a easy folding of the plate and/or sheet of a heat insulating material, preferably a polymeric foam and even more preferred a polypropylene foam, along these regions with a reduced thickness (6) to define the four wall-elements (1, 2, 3 and 4). These regions with a reduced thickness are perpendicular to the upper and/or lower edge(s) of the protective jacket and/or of each wall-element and/or of the plate and/or sheet of a heat insulating material. In addition, the regions with a reduced thickness may for example be provided by cutting preferably vertically into the plate and/or sheet of a heat insulating material, preferably a polymeric foam and even more preferred a polypropylene foam, until a certain depth but without cutting through it or by applying pressure and/or heat to the heat insulating material, preferably a polymeric foam and even more preferred a polypropylene foam, locally in a region, so that it's thickness becomes reduced in this region and that it remains reduced even after the compression and/or the application of heat stopped. The reduction of thickness for example by cutting(s) and/or compression(s) (with or without applying heat) may thereby be achieved for example by cutting into or applying pressure and/or heat to one or the other side of the plate(s) and/or sheets of a heat insulating material, preferably a polymeric foam and even more preferred a polypropylene foam, depending on the folding and especially on the direction to which the folding may be desired and/or should occur. The reduction of thickness may thus occur preferably on the side of the plate(s) and/or sheets of a heat insulating material, preferably a polymeric foam and even more preferred a polypropylene foam, which is opposite to the side to which the folding is desired and/or should occur, so that the folding to this side and/or in this direction may be facilitated. Finally, by linking for example by gluing and/or welding the two edges (7) of the plate and/or sheet of a heat insulating material, preferably a polymeric foam and even more preferred a polypropylene foam, together, one gets protective jacket (as shown from above in Fig. /A) with four rectangular wall-elements linked one to another, each by at least two edges, but without lid or bottom, so that the protective jacket fits on a cuboid. An air layer, which is well insulated from the outside, may be formed between the wall-element (1), (2), (3) and (4), the object to be protected, especially the battery or car battery, the protruding bead (5) and the surface, on which the object to be protected may be placed. The protective jacket may for example be turned and/or placed, so that the protruding bead (5) is located near the upper side of the object to be protected, especially the battery or car battery, so that an air layer, which is well insulated from the outside, could be formed. This air layer preferably insulated from the outside allows a very good insulation of the object to be protected. This insulation is surprisingly comparable to the insulation obtained with closed insulating devices, like for example boxes with a bottom and a lid.
Figure 2 shows a schematic representation of a plate and/or sheet of a heat insulating material, preferably a polymeric foam and even more preferred a polypropylene foam, comprising four rectangular wall-elements (1,2,3 and 4), linked one to another simply because they are part of the same and/or sheet of a heat insulating material, preferably a polymeric foam and even more preferred a polypropylene foam. It may be noted that the plate and/or sheet of a heat insulating material comprises wall-elements with different dimensions. However, the wall-elements (1) and (3) as well as (2) and (4) have respectively the same dimensions. Moreover, the plate and/or sheet of a heat insulating material, preferably a polymeric foam and even more preferred a polypropylene foam, comprise two protruding beads (5), which are arranged parallel and adjacent respectively to the upper and lower edge(s) of the protective jacket and/or of each wall-element and/or of the plate and/or sheet of a heat insulating material. Furthermore, these protruding beads (5) extend along the whole upper and lower edge(s) of the protective jacket and/or of each wall-element and/or of the plate and/or sheet of a heat insulating material. This protruding beads are an inherent parts of the plate and/or sheet of a heat insulating material, preferably a polymeric foam and even more preferred a polypropylene foam, but protrude from the plate and/or sheet of a heat insulating material, preferably a polymeric foam and even more preferred a polypropylene foam. The plate and/or sheet of a heat insulating material, preferably a polymeric foam and even more preferred a polypropylene foam, comprises also three regions with a reduced thickness (6), which allow a easy folding of the plate and/or sheet of a heat insulating material, preferably a polymeric foam and even more preferred a polypropylene foam, along these regions with a reduced thickness (6) to define the four wall-elements (1, 2, 3 and 4). These regions with a reduced thickness are perpendicular to the upper and/or lower edge(s) of the protective jacket and/or of each wall-element and/or of the plate and/or sheet of a heat insulating material. In addition, the regions with a reduced thickness may for example be provided by cutting preferably vertically into the plate and/or sheet of a heat insulating material, preferably a polymeric foam and even more preferred a polypropylene foam, until a certain depth but without cutting through it or by applying pressure and/or heat to the heat insulating material, preferably a polymeric foam and even more preferred a polypropylene foam, locally in a region, so that it's thickness becomes reduced in this region and that it remains reduced even after the compression and/or the application of heat stopped. The reduction of thickness for example by cutting(s) and/or compression(s) (with or without applying heat) may thereby be achieved for example by cutting into or applying pressure and/or heat to one or the other side of the plate(s) and/or sheets of a heat insulating material, preferably a polymeric foam and even more preferred a polypropylene foam, depending on the folding and especially on the direction to which the folding may be desired and/or should occur. The reduction of thickness may thus occur preferably on the side of the of the plate(s) and/or sheets of a heat insulating material, preferably a polymeric foam and even more preferred a polypropylene foam, which is opposite to the side and/or direction to which the folding is desired and/or should occur, so that the folding to this side and/or in this direction may be facilitated. Finally, by linking for example by gluing and/or welding the two edges (7) of the plate and/or sheet of a heat insulating material, preferably a polymeric foam and even more preferred a polypropylene foam, together, one gets protective jacket (as shown from above in Fig. /B) with four rectangular wall-elements linked one to another, each by at least two edges, but without lid or bottom, so that the protective jacket fits on a cuboid. An air layer, which is well insulated from the outside, may be formed between the wall-element (1), (2), (3) and (4), the object to be protected, especially the battery or car battery, and the protruding beads (5). Moreover, there is no need to turn and/or place the protective jacket, so that the protruding bead (5) is located near the upper side of the object to be protected, especially the battery or car battery in this case, to form an air layer preferably insulated from the outside. The formation of an air layer, which is well insulated from the outside, allows a very good insulation of the object to be protected. This insulation is surprisingly comparable to the insulation obtained with closed insulating devices, like for example boxes with a bottom and a lid.

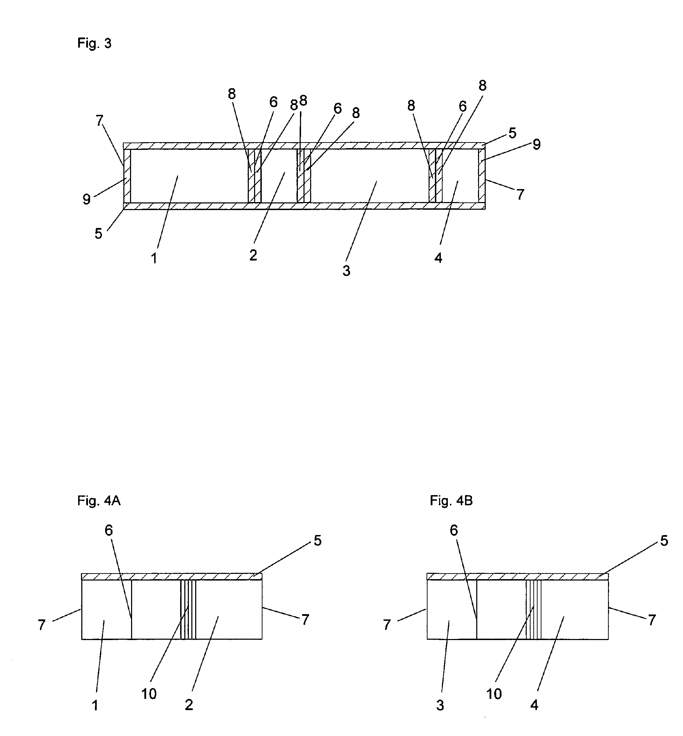

Figure 3 shows a schematic representation of a plate and/or sheet of a heat insulating material, preferably a polymeric foam and even more preferred a polypropylene foam, comprising four rectangular wall-elements (1,2,3 and 4), linked one to another simply because they are part of the same and/or sheet of a heat insulating material, preferably a polymeric foam and even more preferred a polypropylene foam. It may be noted that the plate and/or sheet of a heat insulating material comprises wall-elements of different dimensions. However, the wall-elements (1) and (3) as well as (2) and (4) have respectively the same dimensions. Moreover, the plate and/or sheet of a heat insulating material, preferably a polymeric foam and even more preferred a polypropylene foam, comprise two protruding beads (5), which are arranged parallel and adjacent respectively to the upper and lower edge(s) of the protective jacket and/or of each wall-element and/or of the plate and/or sheet of a heat insulating material used for the protective jacket. Furthermore, these protruding beads (5) extend along the whole upper and lower edge(s) of the protective jacket and/or of each wall-element and/or of the plate and/or sheet of a heat insulating material used for the protective jacket. The plate and/or sheet of a heat insulating material, preferably a polymeric foam and even more preferred a polypropylene foam, comprises also three regions with a reduced thickness (6), which allow a easy folding of the plate and/or sheet of a heat insulating material, preferably a polymeric foam and even more preferred a polypropylene foam, along these regions with a reduced thickness (6) to define the four wall-elements (1, 2, 3 and 4). These regions with a reduced thickness are perpendicular to the upper and/or lower edge(s) of the protective jacket and/or of each wall-element and/or of the plate and/or sheet of a heat insulating material used for the protective jacket. In addition, the regions with a reduced thickness may for example be provided by cutting preferably vertically into the plate and/or sheet of a heat insulating material, preferably a polymeric foam and even more preferred a polypropylene foam, until a certain depth but without cutting through it or by applying pressure ad/or heat to the heat insulating material, preferably a polymeric foam and even more preferred a polypropylene foam locally in a region, so that it's thickness becomes reduced in this region and that it remains reduced even after the compression and/or the application of heat stopped. The reduction of thickness for example by cutting(s) and/or compression(s) (with or without applying heat) may thereby be achieved for example by cutting into or applying pressure and/or heat to one or the other side of the plate(s) and/or sheets of a heat insulating material, preferably a polymeric foam and even more preferred a polypropylene foam, depending on the folding and especially on the direction to which the folding may be desired and/or should occur. The reduction of thickness may thus occur preferably on the side of the of the plate(s) and/or sheets of a heat insulating material, preferably a polymeric foam and even more preferred a polypropylene foam, which is opposite to the side and/or direction to which the folding is desired and/or should occur, so that the folding to this side and/or in this direction may be facilitated. Beside this, two protruding beads (8) are arranged parallel and adjacent to each region with a reduced thickness (6), so that one protruding bead (8) is located on the left of each region with a reduced thickness (6) and the other protruding bead (8) is located on the right of each region with a reduced thickness (6). The two protruding beads (8) may be arranged parallel and adjacent to each region with a reduced thickness, so that one protruding bead (8) is located on the left of each region with a reduced thickness (6) and the other protruding bead (8) is located on the right of each region with a reduced thickness (6) and so that the protruding beads (8) extend along the whole regions with a reduced thickness (6) and/or from at least one protruding bead (5) to another protruding bead (5). Moreover, the plate and/or sheet of a heat insulating material, preferably a polymeric foam and even more preferred a polypropylene foam, comprises two protruding beads (9) which are arranged parallel and adjacent to left edge of the wall-element (1) and to the right edge of the wall-element (4) respectively. These protruding beads (9) extend along the whole left and/or right edges of the wall-elements (1) and (4) respectively and/or from at least one protruding bead to at least another protruding bead. All the protruding beads are an inherent parts of the plate and/or sheet of a heat insulating material, preferably a polymeric foam and even more preferred a polypropylene foam, but protrude from the plate and/or sheet of a heat insulating material, preferably a polymeric foam and even more preferred a polypropylene foam. Finally, by linking for example by gluing and/or welding the two edges (7) of the plate and/or sheet of a heat insulating material, preferably a polymeric foam and even more preferred a polypropylene foam, together, one gets protective jacket (as shown from above in Fig. /B) with four rectangular wall-elements linked one to another, each by at least two edges, but without lid or bottom, so that the protective jacket fits on a cuboid. Air layers, which are well insulated from the outside, may be formed between the wall-element (1), the object to be protected, especially the battery or car battery, the protruding beads (5) and the protruding bead (9) and (8) of wall-element (1), as well as between the wall-element (2), the object to be protected, especially the battery or car battery, the protruding beads (5) and both protruding beads (8) of wall-element (2), as well as between the wall-element (3), the object to be protected, especially the battery or car battery, the protruding beads (5) and both protruding beads (8) of wall-element (3), as well as between the wall-element (4), the object to be protected, especially the battery or car battery, the protruding beads (5) and the protruding beads (8) and (9) of wall-element (4). Moreover, there is no need to turn and/or place the protective jacket, so that the protruding bead (5) is located near the upper side of the object to be protected, especially the battery or car battery in this case, to form at least one air layer, which is well insulated from the outside. The insulation of the air layer(s), which may be formed, may thereby be improved as the protruding beads (8) and (9) prevent these air layers respectively from reaching (a) region(s) with a reduced thickness (6) or the link between the two edges (7), where de contact between the protruding beads (5) and the object to be protected may not be optimal. The formation of at least one air layer, which is well insulated from the outside, allows a very good insulation of the object to be protected. This insulation is surprisingly comparable to the insulation obtained with closed insulating devices, like for example boxes with a bottom and a lid.

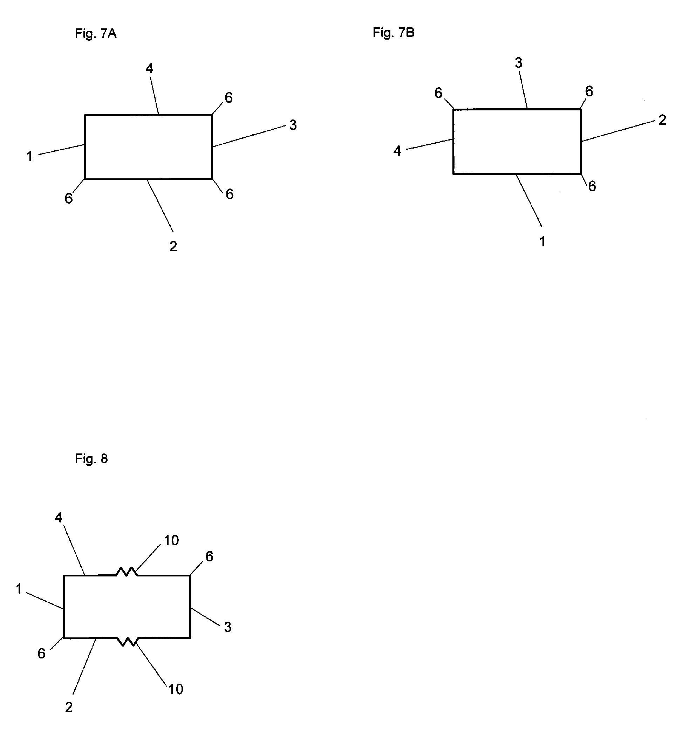

Figure 4 shows a schematic representation of two plates and/or sheets (Fig. 4A and Fig.4B) of a heat insulating material, preferably a polymeric foam and even more preferred a polypropylene foam, comprising two rectangular wall-elements each. The first plate and/or sheet (Fig.4A) of a heat insulating material, preferably a polymeric foam and even more preferred a polypropylene foam, comprises the wall-elements (1 and 2), which are linked one to another simply because they are part of the same and/or sheet of a heat insulating material, preferably a polymeric foam and even more preferred a polypropylene foam. Whereas, the second plate and/or sheet (Fig. 4B) of a heat insulating material, preferably a polymeric foam and even more preferred a polypropylene foam, comprises the wall-elements (3 and 4), which are linked one to another simply because they are part of the same and/or sheet of a heat insulating material, preferably a polymeric foam and even more preferred a polypropylene foam. It may be noted that both plates and/or sheets of a heat insulating material comprise two wall-elements of different dimensions. However, the wall-elements (1) and (3) as well as (2) and (4) have respectively the same dimensions. Moreover, each plate and/or sheet of a heat insulating material, preferably a polymeric foam and even more preferred a polypropylene foam, comprises a protruding bead (5), which is arranged parallel and adjacent to the upper edge of the protective jacket and/or of each wall-element and/or of each plate and/or sheet of a heat insulating material used for the protective jacket. Furthermore, these protruding beads (5) extend along the whole upper edge(s) of the protective jacket and/or of each wall-element and/or of each plate and/or sheet of a heat insulating material used for the protective jacket. Each plate and/or sheet of a heat insulating material, preferably a polymeric foam and even more preferred a polypropylene foam, comprises also a region with a reduced thickness (6), which allow a easy folding of the plate and/or sheet of a heat insulating material, preferably a polymeric foam and even more preferred a polypropylene foam, along these regions with a reduced thickness (6) to define the wall-elements. These regions with a reduced thickness are perpendicular to the upper and/or lower edge(s) of the protective jacket and/or of each wall-element and/or of each plate and/or sheet of a heat insulating material used for the protective jacket. In addition, the region with a reduced thickness may be for example provided by cutting preferably vertically into the plate and/or sheet of a heat insulating material, preferably a polymeric foam and even more preferred a polypropylene foam, until a certain depth but without cutting through it or by applying pressure and/or heat to the heat insulating material, preferably a polymeric foam and even more preferred a polypropylene foam locally in a region, so that it's thickness becomes reduced in this region and that it remains reduced even after the compression and/or the application of heat stopped. The reduction of thickness for example by cutting(s) and/or compression(s) (with or without applying heat) may thereby be achieved for example by cutting into or applying pressure and/or heat to one or the other side of the plate(s) and/or sheets of a heat insulating material, preferably a polymeric foam and even more preferred a polypropylene foam, depending on the folding and especially on the direction to which the folding may be desired and/or should occur. The reduction of thickness may thus occur preferably on the side of the of the plate(s) and/or sheets of a heat insulating material, preferably a polymeric foam and even more preferred a polypropylene foam, which is opposite to the side and/r direction to which the folding is desired and/or should occur, so that the folding to this side and/or in this direction may be facilitated. In addition, each plate and/or sheet of a heat insulating material, preferably a polymeric foam and even more preferred a polypropylene foam, comprises a pleated region (10) with for example 5 pleats, which are part of the wall-elements (2) and (4). Each protruding bead is an inherent part of the plate and/or sheet of a heat insulating material, preferably a polymeric foam and even more preferred a polypropylene foam, but protrude from the plate and/or sheet of a heat insulating material, preferably a polymeric foam and even more preferred a polypropylene foam it belongs to. Finally, by linking for example by gluing and/or welding the edges (7) of the two plates and/or sheets of a heat insulating material, preferably a polymeric foam and even more preferred a polypropylene foam, together, so that the right and left edges (7) of the first plate and/or sheet of a heat insulating material, preferably a polymeric foam and even more preferred a polypropylene foam, are linked respectively to the left and right edges (7) of the second plate and/or sheet of a heat insulating material, preferably a polymeric foam and even more preferred a polypropylene foam, one gets protective jacket (as shown from above in Fig. 8) with four rectangular wall-elements linked one to another, each by at least two edges, but without lid nor bottom, so that the protective jacket fits on a cuboid. An air layer, which is well insulated from the outside, may be formed between the wall-element (1), (2), (3) and (4), the object to be protected, especially the battery or car battery, the protruding bead(s) (5) and the surface, on which the object to be protected may be placed. The protective jacket may be for example turned and/or placed, so that the protruding bead (5) is located near the upper side of the object to be protected, especially the battery or car battery, so that an air layer, which is well insulated from the outside, could be formed. This air layer, which is well insulated from the outside, allows a very good insulation of the object to be protected. This insulation is comparable to the insulation obtained with closed insulating devices, like for example boxes with a bottom and a lid

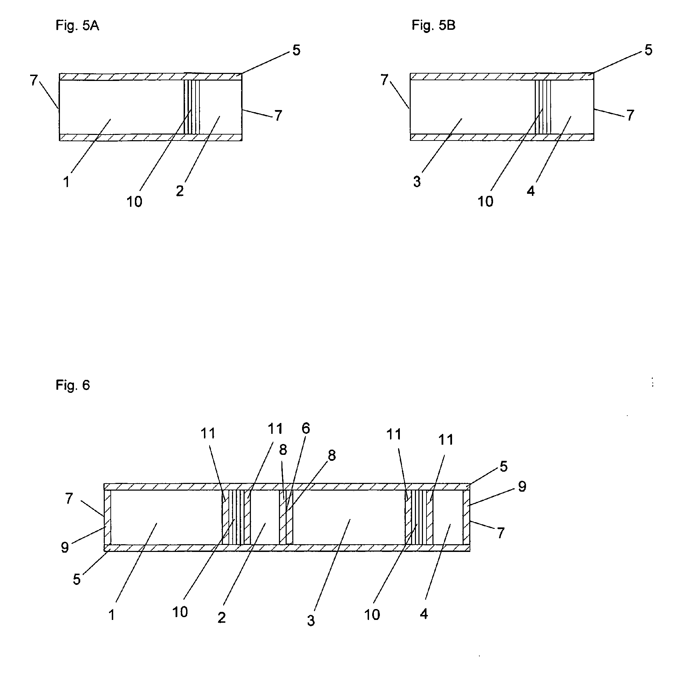

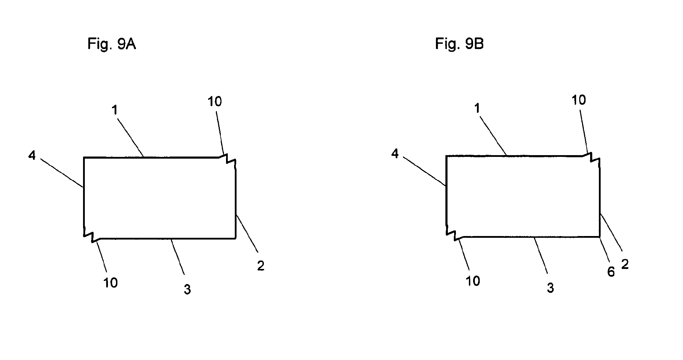

Figure 5 shows a schematic representation of two plates and/or sheets (Fig. 5A and Fig.5B) of a heat insulating material, preferably a polymeric foam and even more preferred a polypropylene foam, comprising two rectangular wall-elements each. The first plate and/or sheet (Fig.5A) of a heat insulating material, preferably a polymeric foam and even more preferred a polypropylene foam, comprises the wall-elements (1 and 2), which are linked one to another simply because they are part of the same and/or sheet of a heat insulating material, preferably a polymeric foam and even more preferred a polypropylene foam. Whereas, the second plate and/or sheet (Fig. 5B) of a heat insulating material, preferably a polymeric foam and even more preferred a polypropylene foam, comprises the wall-elements (3 and 4), which are linked one to another simply because they are part of the same and/or sheet of a heat insulating material, preferably a polymeric foam and even more preferred a polypropylene foam. It may be noted that both plates and/or sheets of a heat insulating material comprise two wall-elements of different dimensions. However, the wall-elements (1) and (3) as well as (2) and (4) have respectively the same dimensions. Moreover, each plate and/or sheet of a heat insulating material, preferably a polymeric foam and even more preferred a polypropylene foam, comprise two protruding beads (5), which are arranged parallel and adjacent respectively to the upper and lower edge(s) of the protective jacket and/or of each wall-element and/or of each plate and/or sheet of a preferably heat insulated material used for the protective jacket. Furthermore, these protruding beads (5) extend along the whole upper and lower edge(s) of the protective jacket and/or of each wall-element and/or of each plate and/or sheet of a preferably heat insulated material used for the protective jacket. In addition, each plate and/or sheet of a heat insulating material, preferably a polymeric foam and even more preferred a polypropylene foam, comprises a pleated region (10) with for example 5 pleats, which are located between the wall-elements (1) and (2) as well as (3) and (4). The pleated regions (10) may thus facilitate the folding of the plate and/or sheet of a heat insulating material, preferably a polymeric foam and even more preferred a polypropylene foam, but protrude from the plate and/or sheet of a heat insulating material, to define the wall-elements. The pleated regions may therefore preferably be located at some corners of the protective jacket. Each protruding bead is an inherent part of the plate and/or sheet of a heat insulating material, preferably a polymeric foam and even more preferred a polypropylene foam, but protrude from the plate and/or sheet of a heat insulating material, preferably a polymeric foam and even more preferred a polypropylene foam it belongs to. Finally, by linking for example by gluing and/or welding the edges (7) of the two plates and/or sheets of a heat insulating material, preferably a polymeric foam and even more preferred a polypropylene foam, together, so that the right and left edges (7) of the first plate and/or sheet of a heat insulating material, preferably a polymeric foam and even more preferred a polypropylene foam, are linked respectively to the left and right edges (7) of the second plate and/or sheet of a heat insulating material, preferably a polymeric foam and even more preferred a polypropylene foam, one gets protective jacket (as shown from above in Fig. 9A) with four rectangular wall-elements linked one to another, each by at least two edges, but without lid nor bottom, so that the protective jacket fits on a cuboid. An air layer, which is well insulated from the outside, may be formed between the wall-element (1), (2), (3) and (4), the object to be protected, especially the battery or car battery, and the protruding beads (5). Moreover, there may be no need to turn and/or place the protective jacket, so that the protruding bead (5) is located near the upper side of the object to be protected, especially the battery or car battery in this case, to form an air layer, which is well insulated from the outside. The formation of an air layer, which is well insulated from the outside, allows a very good insulation of the object to be protected. This insulation is comparable to the insulation obtained with closed insulating devices, like for example boxes with a bottom and a lid.
Figure 6 shows a schematic representation of a plate and/or sheet of a heat insulating material, preferably a polymeric foam and even more preferred a polypropylene foam, comprising four rectangular wall-elements (1,2,3 and 4), linked one to another simply because they are part of the same and/or sheet of a heat insulating material, preferably a polymeric foam and even more preferred a polypropylene foam. It may be noted that the plate and/or sheet of a heat insulating material comprises wall-elements of different dimensions. However, the wall-elements (1) and (3) as well as (2) and (4) have respectively the same dimensions. Moreover, the plate and/or sheet of a heat insulating material, preferably a polymeric foam and even more preferred a polypropylene foam, comprise two protruding beads (5), which are arranged parallel and adjacent respectively to the upper and lower edge(s) of the protective jacket and/or of each wall-element and/or of the plate and/or sheet of a heat insulating material used for the protective jacket. Furthermore, these protruding beads (5) extend along the whole upper and lower edge(s) of the protective jacket and/or of each wall-element and/or sheet of a heat insulating material used for the protective jacket. The plate and/or sheet of a heat insulating material, preferably a polymeric foam and even more preferred a polypropylene foam, comprises also one region with a reduced thickness (6), which allow a easy folding of the plate and/or sheet of a heat insulating material, preferably a polymeric foam and even more preferred a polypropylene foam, along this region with a reduced thickness (6) to define the wall-elements (2) and (3). These regions with a reduced thickness are perpendicular to the upper and/or lower edge(s) of the protective jacket and/or of each wall-element and/or sheet of a heat insulating material used for the protective jacket. In addition, the region with a reduced thickness may be for example provided by cutting preferably vertically into the plate and/or sheet of a heat insulating material, preferably a polymeric foam and even more preferred a polypropylene foam, until a certain depth but without cutting through it or by applying pressure and/or heat to the heat insulating material, preferably a polymeric foam and even more preferred a polypropylene foam locally in a region, so that it's thickness becomes reduced in this region and that it remains reduced even after the compression and/or the application of heat stopped. The reduction of thickness for example by cutting(s) and/or compression(s) (with or without applying heat) may thereby be achieved for example by cutting into or applying pressure and/or heat to one or the other side of the plate(s) and/or sheets of a heat insulating material, preferably a polymeric foam and even more preferred a polypropylene foam, depending on the folding and especially on the direction to which the folding may be desired and/or should occur. The reduction of thickness may thus occur preferably on the side of the plate(s) and/or sheets of a heat insulating material, preferably a polymeric foam and even more preferred a polypropylene foam, which is opposite to the side and/or direction to which the folding is desired and/or should occur, so that the folding to this side and/or direction may be facilitated. Beside this, two protruding beads (8) are arranged parallel and adjacent to the region with a reduced thickness (6), so that one protruding bead (8) is located on the left of the region with a reduced thickness (6) and the other protruding bead (8) is located on the right of the region with a reduced thickness (6). The protruding beads (8) arranged parallel and adjacent to the region with a reduced thickness, so that one protruding bead (8) is located on the left of the region with a reduced thickness (6) and the other protruding bead (8) is located on the right of the region with a reduced thickness (6) and so that the two protruding beads (8) extend along the whole region with a reduced thickness (6) and/or from at least one protruding bead (5) to at another protruding bead (5). Moreover, the plate and/or sheet of a heat insulating material, preferably a polymeric foam and even more preferred a polypropylene foam, comprises two protruding beads (9) which are arranged parallel and adjacent to left edge of the wall-element (1) and to the right edge of the wall-element (4) respectively. These protruding beads (9) extend along the whole left and/or right edge of the wall-elements (1) and (4) respectively and/or from at least one protruding bead to at least another protruding bead. In addition, the plate and/or sheet of a heat insulating material, preferably a polymeric foam and even more preferred a polypropylene foam, comprises two pleated regions (10) with for example 5 pleats each, which are located between the wall-elements (1) and (2) as well as (3) and (4). The pleated regions (10) may thus facilitate the folding of the plate and/or sheet of a heat insulating material, preferably a polymeric foam and even more preferred a polypropylene foam, but protrude from the plate and/or sheet of a heat insulating material, to define the wall-elements. The pleated regions may therefore be located at some corners of the protective jacket. All the protruding beads are an inherent parts of the plate and/or sheet of a heat insulating material, preferably a polymeric foam and even more preferred a polypropylene foam, but protrude from the plate and/or sheet of a heat insulating material, preferably a polymeric foam and even more preferred a polypropylene foam. Finally, by linking for example by gluing and/or welding the two edges (7) of the plate and/or sheet of a heat insulating material, preferably a polymeric foam and even more preferred a polypropylene foam, together, one gets protective jacket (as shown from above in Fig. 9B) with four rectangular wall-elements linked one to another, each by at least two edges, but without lid nor bottom, so that the protective jacket fits on a cuboid. Air layers, which are well insulated from the outside, may be formed between the wall-element (1), the object to be protected, especially the battery or car battery, the protruding beads (5) and the protruding bead (9) and (11) of wall-element (1), as well as between the wall-element (2), the object to be protected, especially the battery or car battery, the protruding beads (5) and the protruding beads (11) and (8) of wall-element (2), as well as between the wall-element (3), the object to be protected, especially the battery or car battery, the protruding beads (5) and the protruding beads (8) and (11) of wall-element (3), as well as between the wall-element (4), the object to be protected, especially the battery or car battery, the protruding beads (5) and the protruding beads (11) and (9) of wall-element (4). Moreover, there may be no need to turn and/or place the protective jacket, so that the protruding bead (5) is located near the upper side of the object to be protected, especially the battery or car battery in this case, to form at least one air layer, which is well insulated from the outside. The insulation of the air layers, which are formed may thereby be improved as the protruding beads (8), (9) and (11) prevent these air layers respectively from reaching (a) region(s) with a reduced thickness (6), the link between the two edges (7) or (a) pleated region(s) (10), where the contact between the protruding beads (5) and the object to be protected may not be optimal. The formation of an air layer, which is preferably well insulated from the outside, allows a very good insulation of the object to be protected. This insulation is surprisingly comparable to the insulation obtained with closed insulating devices, like for example boxes with a bottom and a lid.
Fig. 7 shows a schematic representation from above of a protective jacket obtained by linking for example by gluing and/or welding the two edges (7) of a plate and/or sheet of a heat insulating material, preferably a polymeric foam and even more preferred a polypropylene foam, together to get a protective jacket with four rectangular wall-elements (1,2, 3 and 4) linked one to another, each by at least two edges, but without lid nor bottom, that fits on a cuboid. The protective jacket comprises moreover three regions with a reduced thickness (6). Fig. /A shows a schematic representation of the protective jacket, which may be obtained by using the plate and/or sheet of a heat insulating material, preferably a polymeric foam and even more preferred a polypropylene foam, shown in Fig. 1. On the other hand, Fig. /B shows a schematic representation of the protective jacket, which may be obtained by using the plate and/or sheet of a heat insulating material, preferably a polymeric foam and even more preferred a polypropylene foam, shown in Fig. 2 or Fig. 3.
Fig. 8 shows a schematic representation from above of the protective jacket obtained by linking for example by gluing and/or welding the edges (7) of the plates and/or sheets of a heat insulating material, preferably a polymeric foam and even more preferred a polypropylene foam, together, so that the right and left edge of the first plate and/or sheet of a heat insulating material, preferably a polymeric foam and even more preferred a polypropylene foam, is linked respectively to the left and right edge of the second plate and/or sheet of a heat insulating material, preferably a polymeric foam and even more preferred a polypropylene foam, to get a protective jacket with four rectangular wall-elements (1,2, 3 and 4) linked one to another, each by at least two edges, but without lid nor bottom, that fits on a cuboid. The protective jacket comprises moreover two regions with a reduced thickness (6). In addition, It may be noted that the wall-elements (2) and (4) of the protective jacket comprise each one pleated region (10). Fig. 8 thus shows a schematic representation of the protective jacket, which may be obtained by using the plates and/or sheets of a heat insulating material, preferably a polymeric foam and even more preferred a polypropylene foam, shown in Fig. 4.
Fig. 9 shows a schematic representation from above of the protective jacket obtained by linking for example by gluing and/or welding the edges (7) of the plate(s) and/or sheet(s) of a heat insulating material, preferably a polymeric foam and even more preferred a polypropylene foam, together, to get a protective jacket with four rectangular wall-elements (1,2, 3 and 4) linked one to another, each by at least two edges, but without lid nor bottom, that fits on a cuboid. The protective jacket comprises two pleated regions pleated region (10) located preferably in two opposite corners of the protective jacket. One pleated region (10) is thereby located between the wall-elements (1) and (2), while the other one is located between the wall-element (3) and (4). Fig. 9A thus shows a schematic representation from above of the protective jacket, which may be obtained by using the plates and/or sheets of a heat insulating material, preferably a polymeric foam and even more preferred a polypropylene foam, shown in Fig. 5. The protective jacket shown in Fig. 9A comprises two plates and/or sheets of a heat insulating material, preferably a polymeric foam and even more preferred a polypropylene foam, so that the right and left edges (7) of the first plate and/or sheet of a heat insulating material, preferably a polymeric foam and even more preferred a polypropylene foam, are linked respectively to the left and right edges (7) of the second plate and/or sheet of a heat insulating material, preferably a polymeric foam and even more preferred a polypropylene foam. Whereas Fig. 9B thus shows a schematic representation from above of the protective jacket, which is obtained by using the plate and/or sheet of a heat insulating material, preferably a polymeric foam and even more preferred a polypropylene foam, shown in Fig. 6. The protective jacket shown in Fig. 9B comprises only one plate and/or sheet of a heat insulating material, preferably a polymeric foam and even more preferred a polypropylene foam, and a region with a reduced thickness (6).

### List of reference numerals

- 1, 2,: wall-element(s)
- 3,4: wall-element(s)
- 5: protruding bead(s), which is/are arranged parallel and adjacent to the upper and/or lower edge of the protective jacket and/or of a wall-element and/or of a plate and/or sheet of a heat insulating material
- 6: region with a reduced thickness
- 7: edges of the plate(s) and/or sheet(s) of a heat insulating material, preferably a polymeric foam and even more preferred a polypropylene foam, which are linked together to form the protective jacket
- 8: protruding bead(s), which is/are arranged parallel and adjacent to a region with a reduced thickness
- 9: protruding bead(s), which is/are arranged parallel and adjacent to right or left edge of a wall-element and/or of a plate and/or sheet of a heat insulating material, preferably a polymeric foam and even more preferred a polypropylene foam
- 10: pleated region
- 11: protruding bead(s), which is/are arranged parallel and adjacent I to a pleated region

## Claims

1. Protective jacket, which may be used to protect a battery against excessive, repeated and/or unwanted temperature variations,
**characterized in that,**
it comprises at least two wall-elements linked one to another, each by at least two edges, whereby each of these wall-elements comprises at least one protruding bead arranged in a way, so that each protruding bead is directed towards the inside of the protective jacket.

2. The protective jacket according to claim 1,
**characterized in that**,
it comprises at least one plate/and or sheet of a heat insulating material.

3. The protective jacket according to one or both of the claims 1 or 2,
**characterized in that,**
at least two wall-elements of the protective jacket and/or at least two plates and/or sheets of a heat insulating material used for the protective jacket are linked together by welding.

4. The protective jacket according to one or more than one of the claims 1 to 3,
**characterized in that,**
at least one protruding bead is arranged near to an edge of at least one wall-element and/or of at least one plate/and or sheet of a heat insulating material.

5. The protective jacket according to one or more than one of the claims 1 to 4
**characterized in that,**
that at least one protruding bead is arranged parallel to at least one edge of at least one wall-element and/or of at least one plate/and or sheet of a heat insulating material.

6. The protective jacket according to one or more than one of the claims 1 to 5,
**characterized in that,**
at least one protruding bead is arranged parallel to the upper and/or the lower edge of at least one wall-element and/or of at least one plate/and or sheet of a heat insulating material.

7. The protective jacket according to one or more than one of the claims 1 to 6,
**characterized in that,**
at least one protruding bead is arranged adjacent to at least one edge of at least one wall-element and/or of at least one plate/and or sheet of a heat insulating material.

8. The protective jacket according to one or more than one of the claims 1 to 7,
**characterized in that,**
at least one protruding bead extends from one edge of at least one wall-element and/or of at least one plate/and or sheet of a heat insulating material to another edge of this wall-element and/or of that at plate/and or sheet of a heat insulating material.

9. The protective jacket according to one or more than one of the claims 1 to 8,
**characterized in that,**
at least one wall-element and/or at least one plate/and or sheet of a heat insulating material comprises at least one foamed material.

10. The protective jacket according to one or more than one of the claims 1 to 9,
**characterized in that,**
at least one wall-element and/or at least one plate/and or sheet of a heat insulating material comprises a polypropylene foam.

11. The protective jacket according to one or more than one of the claims 1 to 10,
**characterized in that,**
at least one protruding bead of each wall-element and/or of each plate/and or sheet of a heat insulating material is an inherent part of this wall-element and/or of this plate/and or sheet of a heat insulating material.

12. The protective jacket according to one or more than one of the claims 1 to 11,
**characterized in that,**
the protective jacket comprises at least one region with a reduced thickness.

13. The protective jacket according to one or more than one of the claims 1 to 12,
**characterized in that,**
at least one wall-element of the protective jacket and/or at least one plate/and or sheet of a heat insulating material used for the protective jacket comprises at least one additional layer.

14. The protective jacket according to one or more than one of the claims 1 to 13,
**characterized in that,**
at least one wall-element of the protective jacket and/or at least one plate/and or sheet of a heat insulating material used for the protective jacket comprises at least one non-woven layer.

15. The protective jacket according to one or more than one of the claims 1 to 14,
**characterized in that,**
the protective jacket comprises at least one pleated region.

16. The protective jacket according to one or more than one of the claims 1 to 15,
**characterized in that,**
at least one protruding bead is arranged parallel to at least one pleated region.

17. The protective jacket according to one or more than one of the claims 1 to 16,
**characterized in that,**
at least two protruding beads are arranged parallel to each pleated region, so that at least one of these protruding beads is located on the right of the pleated region and at least another is located on the left of the pleated region.

18. Method for producing a protective jacket according to one or more than one of the claims 1 to 17,
**characterized in that,**
at least one wall-element of the protective jacket and/or at least one plate and/or sheet of a heat insulating material used for the protective jacket comprising at least one protruding part is extruded as foamed sheet through adequate nozzle, so that the protruding part belong to the wall-element and/or to the plate and/or sheet of a heat insulating material.

19. The method for producing a protective jacket according to one or both of the claims 18 and 18,
**characterized in that,**
at least one wall-element of the protective jacket and/or at least one plate and/or sheet of a heat insulating material used for the protective jacket least one wall-element and/or part of the protective jacket is laminated with at least one non-woven layer.

20. The method for producing a protective jacket according to one or more than one of the claims 18 and 19,
**characterized in that,**
at least two wall-elements of the protective jacket and/or at least two plates and/or sheets of a heat insulating material used for the protective jacket are welded together.
